(19) 

**Europäisches Patentamt**
**European Patent Office**
**Office européen des brevets**

(11) **EP 4 648 250 A1**

(12) **EUROPEAN PATENT APPLICATION**

(43) Date of publication:
**12.11.2025 Bulletin 2025/46**

(51) International Patent Classification (IPC):
*H02J 3/32* (2006.01)  *B60L 55/00* (2019.01)
*H02J 7/00* (2006.01)

(21) Application number: **25170583.6**

(22) Date of filing: **15.04.2025**

(52) Cooperative Patent Classification (CPC):
**H02J 7/0063; B60L 55/00; H02J 3/322**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **09.05.2024 US 202418659825**

(71) Applicant: **Volvo Car Corporation
405 31 Göteborg (SE)**

(72) Inventors:
• **SOLEIMANI, Hossein
  405 31 Göteborg (SE)**
• **PATEL, Bhavesh
  405 31 Göteborg (SE)**
• **VADIVEL, Balaji
  405 31 Göteborg (SE)**
• **RAVIKUMAR, Divya
  405 31 Göteborg (SE)**
• **GONG, Ping
  405 31 Göteborg (SE)**

(74) Representative: **Nederlandsch Octrooibureau
P.O. Box 29720
2502 LS The Hague (NL)**

(54) **A BATTERY DISCHARGE SYSTEM**

(57) Various systems and methods are presented regarding discharging electrical energy from a battery pack, wherein the electrical energy can be discharged, via a battery discharge system, to a receiver system such as a microgrid, an electrical grid, a vehicle, or other suitable system configured to receive/store electrical energy. The battery pack can be discharged to facilitate testing of the battery pack. Discharge of the battery pack can be to a single receiver system or shared across two or more receiver systems. Discharging can be based on available receiver systems, time of day, payment/compensation for the electrical energy, and suchlike. Discharging can also be selected based on a user-preference (e.g., prior choice(s) for previous discharging operation). Discharging can be prioritized, e.g., the electrical grid is undergoing a grid emergency and the discharged electrical energy is directed to the electrical grid to assist the electrical grid in recovering from the grid emergency.

**FIG. 1A**

**EP 4 648 250 A1**

**Description**

TECHNICAL FIELD

This application relates to discharging a battery pack to a selected source, e.g., a microgrid, a vehicle, a grid, and suchlike.

BACKGROUND

To enable a battery pack to be tested, the respective batteries in the battery pack may have to be drained. In an example scenario of operation, the battery pack can undergo draining as a function of operation of a vehicle, a device, etc., that includes the battery pack.

The above-described background is merely intended to provide a contextual overview of some current issues and is not intended to be exhaustive. Other contextual information may become further apparent upon review of the following detailed description.

SUMMARY

The following presents a summary to provide a basic understanding of one or more embodiments described herein. This summary is not intended to identify key or critical elements, or delineate any scope of the different embodiments and/or any scope of the claims. The sole purpose of the summary is to present some concepts in a simplified form as a prelude to the more detailed description presented herein.

In one or more embodiments described herein, systems, devices, computer-implemented methods, methods, apparatus and/or computer program products are presented to facilitate energy discharge from a battery pack to a receiver system. In an embodiment, the battery pack can be located onboard a vehicle.

According to one or more embodiments, a system can comprise a memory that stores computer executable components and a processor that executes the computer executable components stored in the memory. The computer executable components can comprise a battery discharge component configured to determine an amount of excess energy available for discharge from a battery pack, further determine at least one receiver system for the excess energy; and further control transfer of the excess energy from the battery pack to the at least one receiver system. In an embodiment, the battery can comprise of at least one battery cell.

In an embodiment, the at least one receiver system can comprise one of a microgrid, a battery pack located onboard a vehicle, a wide area synchronous grid, or other energy storage device configured to receive electrical energy.

In an embodiment, the battery discharge component can be further configured to determine an operating condition of the at least one receiver system.

In an embodiment, in the event of the recipient system being a wide area synchronous grid, the battery discharge component can be further configured to determine the operating condition of the wide area synchronous grid, and in response to determining the wide area synchronous grid is in a grid emergency condition, selecting the wide area synchronous grid as the receiver system for the excess energy.

In a further embodiment, the battery discharge component can be further configured to further determine whether the wide area synchronous grid is currently in a grid emergency condition, and in response to determining the operating condition of the wide area synchronous grid is currently not in a grid emergency condition, terminating discharge of the excess energy to the wide area synchronous grid.

In another embodiment, the battery discharge component can be further configured to determine a discharge parameter to be compliant with during the discharging operation, wherein the discharge parameter can include a thermal condition, a voltage condition, a current, an impedance, a grid code, a specification, or a regulation, and further control the discharge of the excess energy in accordance with the discharge parameter.

In another embodiment, the system can further comprise a presentation component configured to present a list of options to prioritize selection of a receiver system, determine an option selected from the list of options, further rank the receiver systems based on the selected option, and further present the receiver systems in accordance with the ranking based on the selected option.

In another embodiment, the presentation component can be further configured to: (a) present a set of inputs, wherein the set of inputs facilitate selection of respective portions of the excess energy to be discharged to a respective receiver system in the at least one receiver system; (b) receive a first input regarding a first portion of excess energy to discharge to a first receiver system; (c) receive a second input regarding a second portion of excess energy to discharge to a second receiver system; and wherein the discharge component is further configured to: (a) control discharge of the first portion of excess energy to the first receiver system; and (b) control discharge of the second portion of excess energy to the second receiver system.

In an embodiment, the battery pack can be configured to be implemented onboard an electric vehicle and provision power to the electric vehicle.

In other embodiments, elements described in connection with the disclosed systems can be embodied in different forms such as computer-implemented methods, computer program products, or other forms. For example, in an embodiment, a computer-implemented method can be performed by a device operatively coupled to a processor, wherein the computer-implemented method can comprise determining, by the device, an amount of excess energy to be discharged from a battery pack, further determining, by the device, a group of receiver systems available to receive the excess energy, and further controlling, by the device, discharge of the excess energy to at least one receiver systems in the group of receiver systems.

In an embodiment, the battery pack can comprise at least one battery cell, and at least one receiver system comprises one of a microgrid, a battery pack located onboard a vehicle, a wide area synchronous grid, or other energy storage device configured to receive electrical energy.

In a further embodiment, the battery pack can be located onboard a vehicle, and the battery pack can be configured to provide electrical energy to the vehicle.

In another embodiment, the computer-implemented method can further comprise presenting, by the device, a list of options to prioritize selection of a receiver system, further determining, by the device, an option selected from the list of options, further ranking, by the device, the receiver systems based on the selected option, further presenting, by the device, the receiver systems in accordance with the ranking based on the selected option, and further receiving, by the device, a selected receiver system to receive the excess energy.

In another embodiment, in the event of the receiver system is a wide area synchronous grid, the computer-implemented method can further comprise determining, by the device, an operating condition of the wide area synchronous grid, and further, in response to determining the wide area synchronous grid is in a grid emergency condition, selecting, by the device, the wide area synchronous grid as the receiver system for the excess energy.

Further embodiments can include a computer program product comprising a computer readable storage medium having program instructions embodied therewith to enable discharge of excess energy from a battery pack. The program instructions are executable by a processor, and can cause the processor to determine an amount of excess energy to be discharged from a battery pack, further determine a group of receiver systems available to receive the excess energy, and further control discharge of the excess energy to at least one receiver systems in the group of receiver systems.

In another embodiment, the program instructions are further executable by the processor to cause the processor to (s) present a list of options to prioritize selection of a receiver system, (b) determine an option selected from the list of options, (c) rank the receiver systems based on the selected option, (d) present the receiver systems in accordance with the ranking based on the selected option, and (e) receive an input indicating a selected receiver system to receive the excess energy.

In another embodiment, the at least one receiver system can comprise a microgrid, a battery pack located onboard a vehicle, a wide area synchronous grid, or other energy storage device configured to receive electrical energy.

In another embodiment, the battery pack can be configured to provision electrical energy to a vehicle.

In another embodiment, in the event of the recipient system is a wide area synchronous grid, the program instructions are further executable by the processor to cause the processor to determine the operating condition of the wide area synchronous grid, and, in response to determining the wide area synchronous grid is in a grid emergency condition, select the wide area synchronous grid as the receiver system for the excess energy.

DESCRIPTION OF THE DRAWINGS

One or more embodiments are described below in the Detailed Description section with reference to the following drawings.

**FIG. 1A** illustrates a system comprising various components and devices configured to implement, monitor, and/or control discharge of excess energy from a battery pack, in accordance with at least one embodiment.

**FIG. 1B** further illustrates a system comprising various components and devices configured to implement, monitor, and/or control discharge of excess energy from a battery pack, in accordance with at least one embodiment.

**FIG. 2** presents a schematic illustrating an example configuration of a first EV discharging power to a second EV, in accordance with an embodiment.

**FIG. 3A** presents an example of a screen/display enabling selection of one or more energy receivers, in accordance with an embodiment.

**FIG. 3B** presents an example of a screen/display during a grid emergency occurring, in accordance with an embodiment.

**FIG. 4** presents a flowchart of a computer-implemented method for discharging energy from a battery pack, in accordance with an embodiment.

**FIG. 5** presents a flowchart of a computer-implemented method for prioritizing battery pack discharging, in accordance with an embodiment.

**FIG. 6** presents a flowchart of a computer-implemented method for recommending a battery pack discharging receiver/process, in accordance with an embodiment.

**FIG. 7** presents a flowchart of a computer-implemented method for prioritizing battery pack discharging, in accordance with an embodiment.

**FIG. 8** presents a flowchart of a computer-implemented method for discharging excess energy from a battery pack to one or more receiver systems, in accordance with an embodiment.

**FIG. 9** is a block diagram illustrating an example computing environment in which the various embodiments described herein can be implemented.

**FIG. 10** is a block diagram illustrating an example computing environment with which the disclosed subject matter can interact, in accordance with an embodiment.

DETAILED DESCRIPTION

The following detailed description is merely illustrative and is not intended to limit embodiments and/or application or uses of embodiments. Furthermore, there is no intention to be bound by any expressed and/or implied information presented in any of the preceding Background section, Summary section, in the Detailed Description section, and/or the Abstract.

One or more embodiments are now described with reference to the drawings, wherein like referenced numerals are used to refer to like elements throughout. In the following description, for purposes of explanation, numerous specific details are set forth in order to provide a more thorough understanding of the one or more embodiments. It is evident, however, in various cases, that the one or more embodiments can be practiced without these specific details.

As used herein, "data" can comprise metadata. Further, ranges A-*n* are utilized herein to indicate a respective plurality of devices, components, signals etc., where *n* is any positive integer.

In the various embodiments presented herein, the disclosed subject matter can be directed to construction and implementation of a battery discharge system (BDS), wherein the battery discharge system can be configured to discharge energy from a battery pack. In an embodiment, rather than relying on normal operation of a device to which the battery pack is located onboard/connected to (e.g., a battery pack onboard a vehicle, a battery pack included in a generator system, a battery pack functioning as a storage system for a wind turbine/solar energy system, and suchlike) to naturally drain the battery pack, e.g., operation of the vehicle, the BDS can be utilized to drain the battery pack. Further, rather than draining the battery pack in a normal manner of use (e.g., operation of a vehicle), the BDS can be configured to fast drain the battery pack, enabling the energy drain operation to be completed in a shorter period of time than can be achieved through draining the battery pack via normal operation.

**TERMS**

**BACKEND SYSTEM:** a centralized system in communication with any of an EV, an EVSE, DSO, operator of a power grid, chargepoint operator, and suchlike. In an embodiment, the backend system can authorize/approve implementation of respective grid codes/parameters/specification for a grid/DSO at a location for vehicle-to-grid (V2G) operation by the BDS. The backend system can be configured to receive grid codes/parameters/specifications from a grid/DSO and forward the grid codes/parameters/specifications to the BDS. The backend system can control/authorize whether a BDS can perform V2G operation(s) at a current location/EVSE. The backend system can be a "cloud-based" system. The backend system can be operated by a third/3rd party authorized by the owner of the EV, by an original equipment manufacturer (OEM) of the EV, by a fleet car owner, rental vehicle owner, and suchlike. While not shown, a backend system can be included in the battery discharge system (BDS).

**BATTERY PACK:** can comprise any medium/device for storing/discharging electrical energy. A battery pack can comprise of any of a single battery cell, a battery pack comprising a group/set/collection of battery cells electrically connected/coupled together, a battery pack comprising two or more battery modules electrically coupled wherein a battery module is formed from one or more battery cells, and suchlike. The terms battery cell, battery pack, battery module, and suchlike, are used interchangeably herein. As further described, a battery pack can be a standalone device, such as a portable battery which can be readily connected/disconnected from a device for which the battery pack is to provide power, through to a battery pack that is located onboard a system (e.g., an EV), wherein the battery pack can provide electrical energy to the system, and also receive electrical energy from the system. In an example scenario of operation/use, the battery pack can be located onboard a vehicle, wherein removal/testing of the battery pack may be complex.

**BEV:** Battery electric vehicle.

**BPT:** Bidirectional Power Transfer, e.g., grid to EV/BDS, EV/BDS to grid, and suchlike.

**DER:** Distributed energy resource is a small-scale unit of power generation that operates locally and is connected to a larger power grid at the distribution level. DERs can include electric vehicles, solar panels, etc.

**DSO:** Distribution system operators are companies distributing electricity for a given region of operation. A first DSO, operating across a first region, can enable access (e.g., via a first billable account) to an energy grid, while a second DSO, operating at a second region, can enable access (e.g., via a second billable account) to the same energy grid. For example, more than one thousand DSOs are operating in Europe and able to feed-in energy back to the electricity grid in their operating area. An EV/BDS operating as a generator should be certified/in compliance with any grid codes/specifications applicable to a region and also requires approval of the DSO providing grid access in the region. Entities DSO and TSO are used interchangeably herein.

**EV:** Electric vehicle, e.g., has an onboard battery pack comprising a group/set of battery cells.

**EVSE:** Electric Vehicle Supply Equipment comprising conductors, including the phase(s), neutral and protective earth conductors, the BDS couplers, attached plugs, and all other accessories, devices, power outlets or apparatuses installed specifically for the purpose of transmitting energy at a location/premises between a BDS and a grid, and further enabling communication/data transmission between a BDS, the grid, a DSO, a backend system, and suchlike, as required during a battery discharge operation.

**GRID CODE:** a grid code is a technical specification defining one or more operation conditions/parameters which a system (e.g., a BDS) connected to a power grid (e.g., a public electric grid) has to meet to ensure safe, secure, and economic functioning of the grid, infrastructure, and/or the connected system. The system can be an electricity generating plant, an EV functioning as a power source/generator, a BDS, a consumer, or another network. The grid code is specified by an authority responsible for the system integrity and network operation (e.g., an operator of the grid, DSO, TSO). Elaboration of a grid code usually involves network operators (DSOs, TSOs), representatives of users and, to an extent varying between countries, the regulating body.

**IEC:** International Electrotechnical Commission (*Commission électrotechnique internationale*) is a Swiss-based international standards organization for electrotechnology, electrical, electronic, and related technologies.

**ISO:** International Organization for Standardization, a Swiss-based organization developing standards for multiple industries, food safety, healthcare, and suchlike.

**OBSERVATION TIME:** during initial stages of interaction and communication between a battery discharge system (BDS) and the grid, as part of a BPT operation with a BDS functioning as an energy source for the grid, an *observation time* is required to be met/elapse before the BDS can perform the power transfer (e.g., as defined in EN 50549-1), with communications between the BDS, an EVSE, and the grid, being specified by, for example, ISO 15118. During the *observation time* period, the BDS, the EVSE, and/or the grid can perform such functions as exchanging respective technical information/parameters/data/limits regarding BPT (charging/discharging) such as confirming that respective operating conditions (e.g., frequency, voltage, power gradient, impedance, and suchlike) are as required for energy transfer between the BDS, the EVSE, and the grid without damaging, for example, a battery attached to the BDS or infrastructure/components of the grid. The *observation time* period can be utilized to ensure the grid is not experiencing a grid emergency, for example.

**PHEV:** plug-in hybrid electric vehicle.

**3rd PARTY SETPOINT:** a parameter/setting/adjustment to a grid code, specification, regulation, and suchlike. Can be provided by any entity associated with the BDS, EVSE, grid, etc., including, in a non-limiting list: a DSO, chargepoint operator, entity associated with a backend system, OEM, home energy management system, energy aggregator, energy flexibility provider, representative of the BDS owner/operator, and suchlike.

**TSO:** Transmission system operator is an entity entrusted with transporting electrical power over a grid between a power generation source to a local distribution point (e.g., an EVSE), and in the case of BPT, from the local distribution point (e.g., to which the BDS is connected) to the power generation source. TSO's are also known as an independent system operator (ISO), a regional transmission organization (RTO), and suchlike.

**VDE:** (*Verband der Elektrotechnik, Elektronik und Informationstechnik,* the Association for Electrical, Electronic & Information Technologies) is a German-based technical-specification association concerned with developing electrical safety standards. VDE conduct standardization work, product testing, and product certification.

## STANDARDS/SPECIFICATIONS/REGULATIONS

It is to be appreciated that while the following presents respective specifications/regulations directed towards energy transfer during BPT operation of an EV connected to a grid, the various embodiments are not so limited and the various embodiments presented herein can be utilized with any pertinent specification/regulation/grid code.

### A. ISO 15118

*ISO 15118 Road Vehicles* is a specification regarding communication(s) between an EV and an EVSE. Under ISO 15118, EVs include BEVs and PHEVs. ISO 15118 details communication between an electric vehicle communication controller (EVCC) (e.g., located on the EV) and a supply equipment communication controller (SECC) (e.g., located on the EVSE), and equipment at the grid/DSO. Communications between an EV, EVSE, DSO, etc., enable one or more specifications, regulations, grid codes, etc., (and associated parameters, e.g., power limits, power values, chargeloop settings, and suchlike), to be identified/shared for a particular location of the EV, e.g., as part of a V2G operation. In an aspect, the BDS can be functioning as the EV.

### B. VDE-AR-*n* 4105

Specification *VDE-AR-n 4105* pertains to power generation systems connected to the low-voltage distribution network/grid, and in particular, provides technical minimum requirements for the connection to and parallel operation with low-voltage distribution networks.

### C. EN 50549-1

Specification *EN 50549-1* details requirements for electrical generating plants to be connected in parallel with electrical distribution networks/grids. Further, Part 1 relates to connection to a Low Voltage (LV) distribution network, in particular, electrical generating plants up to and including Type B. For compliance with EN 50549-1, the respective systems presented herein can include any necessary equipment/components/devices, for example, hardware may be required comprising a digital input/interface with the EVSE (e.g., in the BDS), whereby the digital input can be a hardware digital input and/or an input directly received from a backend system, and suchlike. The digital interface can be provided between the EV and the grid (e.g., operated by the DSO), such that discharging instructions, and suchlike, can be received at the EVSE to enable V2G operation of the EV to be in compliance with EN 50549 grid requirement, e.g., enabling EV to certify as a generator under EN 50549. In an embodiment, the BDS can function as the EV.

### D. ISO 3166-1 & 3166-2

ISO 3166-1 and ISO 3166-2 can be utilized to identify a location of an EV, an EVSE, a BDS, and/or an energy grid, wherein the location can be based on the codes identifying respective countries, regions, subregions, subdivisions (e.g., provinces or states), etc., wherein ISO 3166-2 is known as *Codes for the representation of names of countries and their subdivisions - Part 2: Country subdivision code.* In an aspect, global positioning system (GPS) coordinates/information regarding location of an EV, an EVSE, energy grid, etc., can be utilized to determine respective location under ISO 3166-1 and 3166-2. In an embodiment, the BDS can function as the EV.

### E. IEC 61851-1

IEC 61851 is a standard pertaining to electric vehicle conductive charging systems. IEC 61851 pertains to hardware requirements regarding connection of an EV to an EVSE, whereby IEC 61851 can be extended to comply with respective grid codes/requirements for the EV to operate as an energy source, e.g., limiting an active discharge power based on a received setpoint (e.g., in a signal received from a DSO), digital I/O or cloud backend to receive signals from a DSO, etc. In an embodiment, the BDS can function as the EV.

The various embodiments presented herein can be utilized to control discharging of any battery, wherein the battery may be located on a vehicle, military vehicle, railroad vehicle, a marine vehicle such as a boat, ship, submarine, or marine drone, a winged vehicle such as a plane or drone, and/or a rotor-ed vehicle such as a helicopter or drone. Likewise, one or more embodiments presented herein can be extended to controlling charging of a battery located on a robot and/or any suitable moving or stationary device. Other applicable applications include scooters, Segway®, electric bicycles, E-rickshaws, and the like. Further, one or more embodiments presented herein can be utilized to control charging of a battery, wherein the battery is a standalone device, e.g., the battery is not located on a vehicle, device, etc.

Further, the embodiments can be applied to any vehicle utilizing a battery discharging system, e.g., a Battery Electric Vehicle (BEV) where the powerplant is only an electric motor powered by a battery and the battery is recharged via an external charging station, a Hybrid Electric Vehicle (HEV) having both a gasoline/petrol engine & fuel tank and an electric motor powered by a battery, wherein operation of the HEV recharges the battery (e.g., via a regenerative braking system capturing kinetic energy), a Plug-in Hybrid Electric Vehicle (PHEV) having both a gasoline/petrol engine & fuel tank and an electric motor powered by a battery, wherein the battery can be charged via an external charging station, and the like.

It is to be appreciated that while the various embodiments and concepts are presented as directed to lithium-ion battery technologies, the various embodiments and concepts can be equally applied to any battery technology, including battery cells comprising lithium-ion (Li-ion), lithium nickel cobalt Aluminum (NCA), lithium-nickel manganese cobalt (NMC), lithium-manganese Spinel (LMO), lithium Titanate (LTO), lithium-iron Phosphate (LFP), lithium metal polymer (LMP), nickel manganese cobalt (NMC), nickel-metal hydride (Ni-MH), lithium sulphur (Li-S), lead-acid batteries, as well as ultracapacitors, super capacitors, chemical batteries, solid-state batteries, fuel cells, etc.

BATTERY HEALTH

An operating condition of a battery pack can be of concern as a function of assessing operational degradation of a battery pack/cell. Operational degradation can be largely described by two terms: (a) charge cycle fading (cycle ageing) and (b) calendar ageing. Charge cycle fading is operational degradation of a battery pack resulting from the respective charging and discharging operations throughout the lifetime of the battery pack. Calendar ageing is degradation resulting during the operational lifetime of a battery pack, even where the battery pack is not in use, and from the environment of use, e.g., resulting from a battery pack being utilized at an operating temperature above or below an optimal operating temperature. Owing to electrical coupling of the modules, rather than a module degrading in isolation, a degraded module can deleteriously affect the operational health of other modules in the battery pack.

Regarding assessing operational condition/health of a battery pack, generally, state of charge (SOC) and state of health (SOH) can provide an indication of an ability for a battery pack to a store electrical energy and discharge the energy in a controlled manner. Various algorithms can be utilized to determine SOC, utilizing such measurements as voltage, current, charging profile, and discharging profile for a battery pack. Such algorithms (e.g., offline and/or indirect) include Coulomb counting (ratio of total charge input and maximum capacity of the module), ampere-hour (Ah), open-circuit voltage (OCV), impedance/impedance ratio measurement, chemical, voltage, current integration, and the like. Further, machine learning based algorithms can be utilized, such as neural network fuzzy logic, support vector machine, etc. A further technique is a state-space model estimation utilizing a Kalman filter.

Utilizing the Coulomb counting approach, per Equation 1:

$$SOC = total\ charge\ input\ /\ maximum\ capacity\ of\ a\ module. \qquad \text{(Eqn 1)}$$

The total charge input is based upon the current and time, however current can vary with time which can be corrected by mathematical integration, for example. Further, the maximum capacity of a module can change over time.

The converse of SOC is depth of discharge (DOD), where DOD indicates the percentage of charge in a battery pack/module that has been consumed. SOC is typically referenced when considering the current state of charge of a module, while DOD is typically referenced when considering the lifetime of the module after repeated use.

Over time, as the SOH declines, the operational range of a system powered by the battery pack declines, e.g., range of an EV per charge also declines. SOH can be based upon module capacity, module charge, internal resistance, and the like. SOH can be determined based upon the number of charge/discharge cycles, operational lifetime, and operational performance of the respective modules and battery.

SOH can be determined, in one approach, using the proportional relationship between the current maximum storable capacity and the module rated capacity, per Equation 2:

$$SOH = \frac{C_{aged}}{C_{rated}}\ x100\% \qquad \text{(Eqn 2)}$$

where $C_{aged}$ is the maximum module capacity that the battery pack/module can currently store and $C_{rated}$ is the module's rated capacity. In an example scenario, when the SOH percentage drops to 70%, the lithium-ion battery module is considered to have failed and should be replaced. Accordingly, as the SOH% for a module changes, the operational health of the module changes from "good" (e.g., SOH = 100%) to "poor" (e.g., SOH = 70%).

To facilitate determination of SOC, DOD, SOH, operational health of a battery pack/module, etc., across a variety of operating conditions, various mathematical models can be utilized (e.g., by an artificial intelligence component). A model can operate with such parameters as charging voltage and current profiles, discharging voltage and current profiles, operational load, age, temperature, and the like. Any suitable model can be utilized to respectively determine SOC, DOD, SOH, etc., wherein such models include, in a non-limiting list, Lumped-Parameter model, Equivalent Circuit Model, Electro-chemical model, convolutional neural networks (CNN), long short-term memory (LSTM) by dropout regularization-based fully connected layer, time convolution memory neural network (TCMNN) combining CNN and LSTM, etc.

It is to be appreciated that while the various embodiments presented herein relate to discharging a battery pack in preparation for battery health testing to occur (e.g., SOC, SOH, capacity, and suchlike), the various embodiments can also be applied to discharging electrical energy utilized while a battery pack is undergoing testing.

BATTERY DISCHARGE SYSTEM

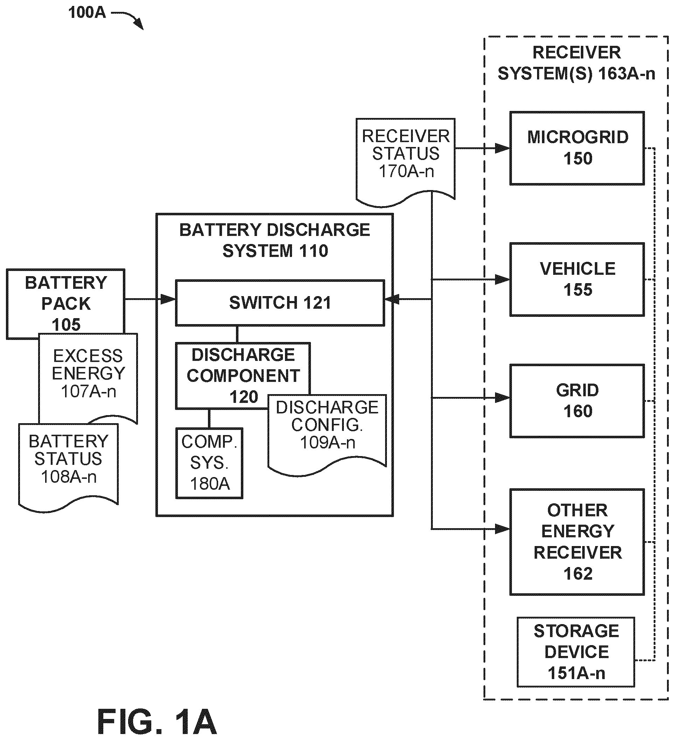

Turning now to the drawings, FIG. 1A illustrates a system 100A comprising various components and devices configured to discharge a battery pack, and further provide a selection of various battery discharge/drain options, in accordance with at least one embodiment. As shown, system 100A comprises a battery pack 105 connected to a battery discharge system (BDS) 110. A battery pack 105 can comprise any medium/device for storing/discharging energy. In a non-limiting list of examples, battery pack 105 can comprise of any of a single battery cell, a battery pack comprising a group/set/collection of battery cells/battery modules electrically connected/coupled together, and suchlike, to facilitate provision of electrical energy to a system, device, equipment, and suchlike.

As further described, battery pack 105 can have currently stored thereon a volume/amount of excess energy 107. Excess energy 107 can be further referenced as excess energy 107A-$n$, wherein a first portion 107A of excess energy 107 can be discharged to a first receiver (e.g., microgrid 150) and a second portion 107B of excess energy 107 can be discharged to a second receiver (e.g., grid 160). Also, battery status 108A-$n$ information/data regarding a current operational state of battery pack 105 can be determined (e.g., by discharge component 120), wherein the battery status 108A-$n$ can indicate an electrochemical state of battery pack 105, a physical state of battery pack 105, and suchlike. Battery status 108A-$n$ can be utilized to determine, for example, how much excess energy 107A-$n$ is available at the battery pack 105, a rate of discharge of the excess energy 107A-$n$ that can be utilized at the battery pack 105 (e.g., by BDS 110) without physically/chemically damaging the battery pack 105, and suchlike.

BDS 110 can be further connected to a series/group/set/collection of energy receiver systems/stores 163A-$n$ (aka recipient systems), such as a microgrid 150, a vehicle 155, a grid 160, an other energy receiver 162, and suchlike. For readability, the various energy receivers/receiver systems/stores are combined in an omnibus term receiver system 163A-$n$, wherein application of the term "receiver system 163A-$n$" herein includes one or more of the microgrid 150, the vehicle 155, the grid 160, the other energy receiver 162, and suchlike. A microgrid 150 can be a local electrical grid, e.g., co-located with BDS 110 at a facility where discharging and testing of battery pack 105 is performed. Microgrid 150 can be configured to operate in isolation from an extensive/regional grid 160, such that microgrid 150 can operate in "island mode" as well as being electrically coupled to grid 160. Accordingly, microgrid 150 can be configured to store electrical energy and provision the electrical energy to equipment/systems/devices located/operational at the facility. Vehicle 155 can be an EV powered by a battery pack (e.g., where such battery pack can be comparable to battery pack 105) located onboard the vehicle 155. Grid 160 can be a large scale grid, e.g., a wide area synchronous grid, whereby grid 160 serves a region greater than microgrid 150. An other energy receiver 162 can be equipment/system/device configured to receive and/or store excess energy 107A-$n$.

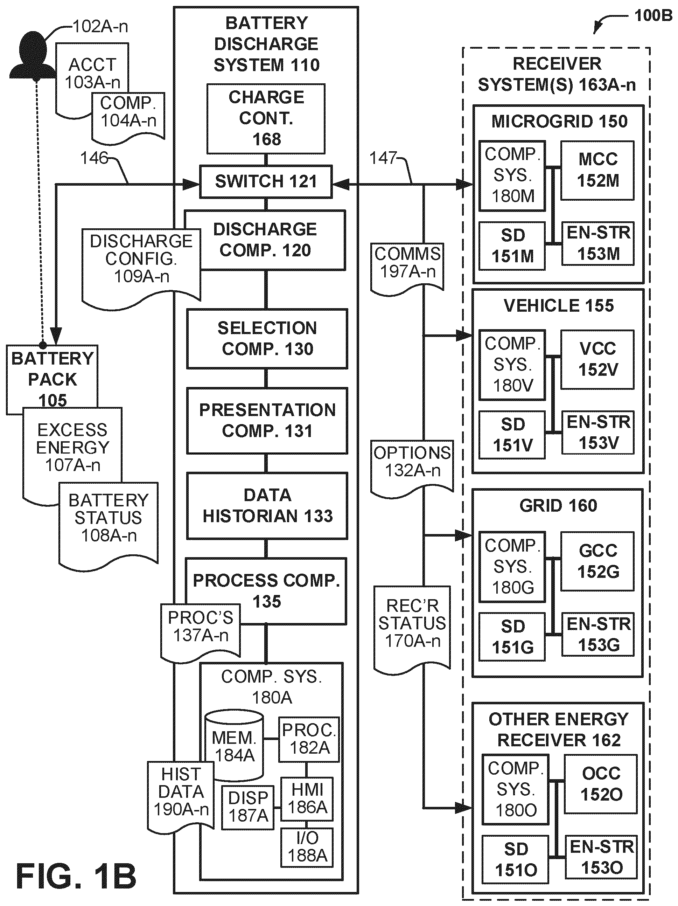

A storage device 151A-$n$ can be located at any of the receiver systems 163A-$n$, and the storage device 151A-$n$ can be any suitable device/system/equipment configured to receive excess energy 107A-$n$, e.g., a battery cell, a battery pack, grid system, and suchlike. (Per FIG. 1B, microgrid 150 includes a storage device 151M, vehicle 155 includes a storage device 151V, grid 160 includes a storage device 151G, and other energy receiver 162 includes a storage device 151O).

As shown in FIG. 1A, BDS 110 can further include a discharge component 120, whereby the discharge component 120 can be configured to control operation of switch component 121 to enable transfer of the excess energy 107A-$n$ from the battery pack 105 to one or more of the receiver systems 163A-$n$. Hence, in accordance, for example, by utilizing a discharge configuration 109A-$n$, the discharge component 120 can control how excess energy 107A-$n$ is to be discharged as a function of controlling switch component 121, wherein switch component 121 can be of any suitable configuration, e.g., a physical switch/system, a digital switch/system, and suchlike.

As further described, BDS 110 can obtain/receive information/data regarding an operating condition, receiver status 170A-$n$, of a respective energy receiver in receiver system 163A-$n$. For example, a receiver status 170G indicates that the energy grid 160 is undergoing a grid emergency, whereby the BDS 110 can prioritize the energy grid 160 to receive the excess energy 107 to assist the energy grid 160 in recovering from the emergency condition.

As mentioned, system 100A can include a discharge component 120. Discharge component 120 can be configured to analyze the battery pack 105 to determine a current battery status 108A-$n$ of the battery pack 105. In an aspect, the battery status 108A-$n$ can provide a measure of the excess energy 107 that is to be removed from the battery pack 105 to prepare battery pack 105 to be in a condition for testing, for example. The battery status 108A-$n$ can also provide information to the discharge component 120 regarding how quickly the excess energy 107 can be removed from the battery pack 105 without damaging one or more of the battery cells in the battery pack 105.

Discharge component 120 can be further configured to utilize battery status 108A-$n$, regarding any of an operating condition of battery pack 105, volume of excess energy 107A-$n$ available to be discharged, also any parameters, data, values, etc., that can be utilized by BDS 110 to configure a discharge of battery pack 105 by a discharge operation/configuration 109A-*n* of the battery pack 105. For example, discharge component 120 can be configured to determine a discharge configuration 109A-*n* for battery pack 105, where the discharge configuration 109A-*n* can be configured to maximize a rate of discharge of the excess energy 107A-*n* while ensuring no physical/chemical damage is caused to the battery pack 105, e.g., compliance with thermal regulation of battery pack 105, voltage, impedance, power, etc. Similarly, receiver status 170A-*n* information can comprise any parameters, data, values, etc., regarding any of the receiver systems 163A-*n*, to be utilized by discharge component 120 to configure a discharge operation to the respective receiver systems 163A-*n*. For example, discharge component 120 can be configured to determine a discharge configuration 109A-*n* for implementation at the respective receiver system 163A-*n* that may maximize the rate of discharge of the excess energy 107A-*n* while ensuring no physical damage is caused to the respective receiver system 163A-*n*, e.g., a charging voltage/charging rate requirement for a respective receiver system 163A-*n* is complied with, and suchlike. Battery status 108A-*n* and/or receiver status 170A-n can be determined based on any suitable sensor (not shown) measuring one or more operating conditions at the battery pack 105 and/or respective receiver system(s) 163A-n, wherein the sensor(s) can be configured to measure/monitor any of one or more of, in a non-limiting list, at least one of pressure, temperature, output voltage/current/capacity, an operating/fault condition of one or more sensors, and other pertinent issues/sources of concern.

As further described, BDS 110 can further include a computer system 180A, configured with memory, computer processor(s), etc., as required to facilitate operation of BDS 110 and respective components included therein, e.g., discharge component 120. As further described, the respective receiver systems 163A-*n* can also include a computer system 180B-*n* and associated processor(s), memory, etc.

Discharge of energy 107 from battery pack 105 can, in one aspect, be considered comparable to a net metering operation, e.g., where an owner of a home-based solar panel/wind turbine system discharges the generated excess energy 107A-*n* to the energy grid 160, and receives a compensation 104A-*n* (payment/incentive) for doing so (per FIG. 1B).

In an embodiment, excess energy 107 can be discharged in the form of alternating current (AC), direct current (DC), and suchlike, depending upon energy storage/operation of the battery pack 105, operation of the receiver system 163A-*n*. As further described, BDS 110 can also include respective equipment to convert the excess energy 107 into a required form, e.g., phase, voltage, etc., as required to enable discharge of excess energy 107 to any of receiver systems 163A-*n*. As further described, BDS 110 can further comprise any necessary equipment to enable discharge of energy 107 from battery pack 105 to the respective energy receiver 163 A*n*.

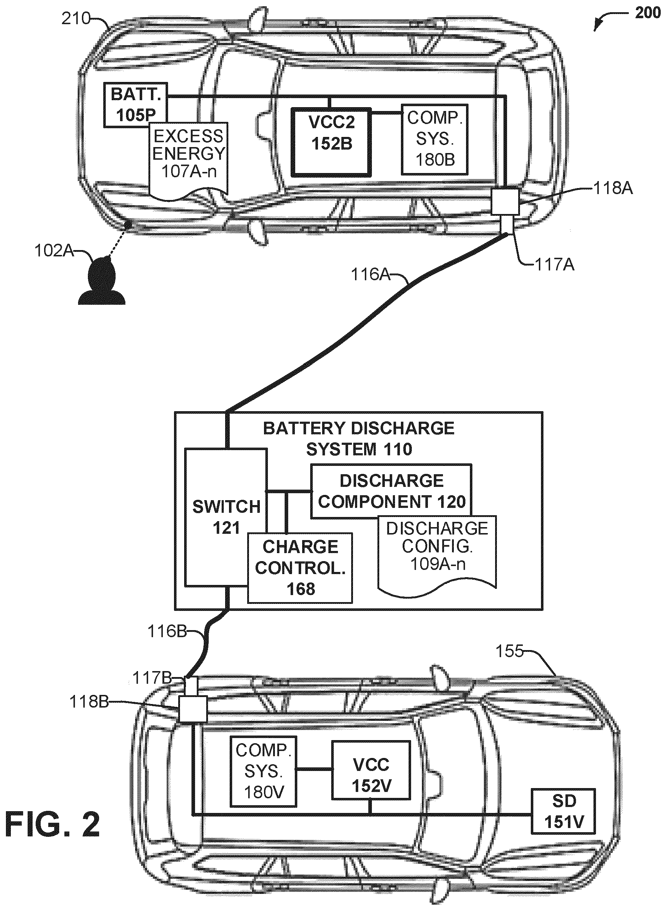

In another aspect, in the event of the battery pack 105 is located on a vehicle (e.g., an EV), discharging of energy 107 can be considered comparable to a vehicle-to-grid (V2G) operation, whereby battery pack 105 discharges the excess energy 107 to grid 160, for example. In another example where the battery pack 105 is located on a vehicle (e.g., an EV), discharging of energy 107 to another vehicle 155 can be considered comparable to a vehicle-to-vehicle (V2V) operation, whereby a first battery pack 105A (located on a first EV, not shown) discharges the excess energy 107 to a second battery pack 105B located onboard vehicle 155 (e.g., where vehicle 155 is a second EV) (e.g., per FIG. 2). In another embodiment, where battery pack 105 is located onboard a vehicle, discharging from battery pack 105 to microgrid 150 can be considered comparable to a vehicle-to-local, V2Local operation. In an embodiment, the other energy receiver system 162 can be a portable device having an onboard battery, such as a laptop computer, whereby discharging from the battery pack 105 to the receiver system 163A-*n* is comparable to a vehicle-to-land, V2L, operation.

More than one discharge configuration 109A-*n* can be determined/concurrently utilized, such as discharge component 120 can utilize a first discharge configuration 109A configured to transfer energy 107 to the microgrid 150, however a second discharge configuration 109B can be configured such that, in the event of the grid 160 is undergoing a grid emergency, the grid 160 is given discharge priority concerning discharging battery pack 105. For example, receiver status 170G indicates grid 160 is undergoing a grid emergency, and even though the first discharge configuration 109A was to be implemented by discharge component 120, a second discharge configuration 109B prioritizing grid 160 is implemented (e.g., while the grid emergency exists). Once the grid emergency condition no longer exists, excess energy 107 can be directed towards another of the receiver systems 163A-n, e.g., microgrid 150. Discharge configurations 109A-*n* can be configured to reflect different prices for energy 107 based on the time of day at which energy 107 is available to be provided to a receiver system 163A-*n*, discharge rates, and suchlike.

BDS 110 can be located at any suitable location. For example, BDS 110 can be located at a battery sales/-servicing/discharging center, at a vehicle servicing facility, and suchlike. In an embodiment, a microgrid 150 can be co-located in combination with the BDS 110, such that the microgrid 150 can be configured to store any discharged energy 107 which can subsequently be utilized to provision power to the discharging facility. In an example embodiment, as previously mentioned, microgrid 150 can be given priority as a receiver for energy 107A-*n*, with the intent that the microgrid 150 is maintained with as much electrical energy as possible. However, during a grid emergency at grid 160, excess energy 107A-*n* from battery pack 105 is discharged to the grid 160.

Turning to FIG. 1B, system 100B, provides further detail regarding the respective systems, components, devices, etc., presented in FIG. 1A. As shown, a battery pack 105 having excess energy 107 is connected to a BDS 110. BDS 110 is further connected to one or more receiver systems 163A-*n*. As previously described, BDS 110 can further include a discharge component 120 configured to analyze battery status 108A-*n*, determine excess energy 107A-*n*, further determine a receiver status 170A-*n* of one or more of receivers 163A-*n*, and based thereon, determine a discharge configuration 109A-*n* to implement to discharge the excess energy 107A-*n* to the one or more receivers 163A-*n*.

As shown, an entity 102A-*n* (e.g., owner, operator, user, etc.) can be associated with the battery pack 105, such that, as further described, entity 102A-*n* can select how the excess energy 107A-*n* it to be discharged to a receiver system 163A-*n*, and suchlike. An account 103A-*n* can be associated with entity 102, such that account 103A-*n* can be configured to receive payment, energy credits, and suchlike (e.g., from discharge component 120), as a compensation 104A-*n* for discharging energy 107A-*n* (e.g., as presented/selected on screen 310, as further described).

As further shown, each of the receiver systems 163A-*n* can include a computer system 180C-*n* (further described below). As previously mentioned, each of the receiver systems 163A-*n* can include a storage device 151A-*n* located at any of the receiver systems 163A-*n*, whereby the storage device 151A-*n* can be any suitable device/system/equipment configured to receive excess energy 107A-*n*, e.g., a battery cell, a battery pack, grid system, and suchlike. Per FIG. 1B, microgrid 150 includes a storage device 151M, vehicle 155 includes a storage device 151V, grid 160 includes a storage device 151G, and other energy receiver 162 includes a storage device 151O. As further shown in FIG. 1B, each of the receiver systems 163A-*n* can further include a control component (CC) configured to, in a non-limiting list, (a) control operation of the receiver system 163A-*n* to which the BDS 110 is connected (e.g., in response to instructions in communications 197A-*n* with BDS 110), (b) communicate with BDS 110 (e.g., transmission of data, receiver status's 170A-*n*, etc.) in communications 197A-*n*, and suchlike. Respective control components include a microgrid control component (MCC) 152M at microgrid 150; vehicle control component (VCC) 152V at vehicle 155; grid control component (GCC) 152G at grid 160; and other control component (OCC) 152O at the other energy receiver 162; and suchlike.

Connection (e.g., via connections 146 and 147) between the battery pack 105 and BDS 110, and further between BDS 110 and the respective receiver system 163A-*n* can utilize any required technique/technology, electrical connection, wiring, communication, and suchlike (e.g., in accordance with the respective standard/specification/regulation/grid code, as previously mentioned). For example, in the event that the battery pack 105 is located onboard a vehicle 210 (per FIG. 2), connection between vehicle 210/battery pack 105 and BDS 110 can be via a charging cable 116A-*n*, with cable 116A-*n* connected to the vehicle 210 via a plug 117 (e.g., J1772, Combined Charging System (CCS), SAE Combo, Charge de Move (CHAdeMO), TESLA®) located at an end of cable 116A-*n*. During charging/discharging, plug 117 is located in a charging port (charging socket) 118 on vehicle 155, wherein the port 118 is connected to the storage device/battery pack SD 151V. Charging of SD 151V can be controlled by BDS 110 in conjunction with VCC 152V (e.g., a battery management system), wherein VCC 152V can be configured to operate in conjunction with a computer system 180V with various commands, instructions, data, etc., being communicated (in communications 197A-n) between VCC 152V and BDS 110, as described further herein.

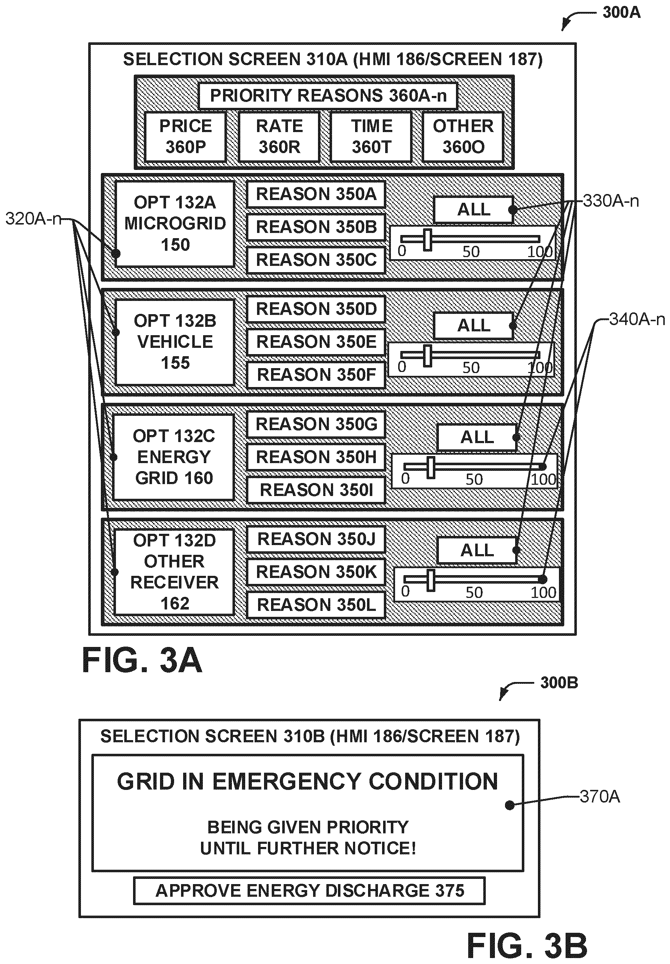

As further shown in FIG. 1B, BDS 110 can further include a selection component 130, wherein selection component 130 can be configured to provide an option list 132A-*n* of receivers 163A-*n* available to discharge the excess energy 107 from the battery pack 105 (e.g., per FIG. 3). The list of options 132A-*n* can be presented to entity 102A, enabling entity 102A to select a receiver system 163A-*n* for the energy 107. Any suitable selection can be utilized, e.g., in a first example scenario, entity 102A can select 100% of energy 107 is to be discharged to a single receiver system such as 100% of energy 107 is discharged to microgrid 150. In another example scenario, entity 102A may select that energy 107 is discharged to two or more of receiver systems 163A-*n*, such that entity 102A selects 60% of energy 107 is discharged to microgrid 150 and 40% of energy 107 is discharged to grid 160. Selection component 130 can be further configured to provide various reasons 350A-*n* (e.g., per FIG. 3), considerations, requirements, and suchlike, regarding why a particular receiver system 163A-*n* may be chosen, e.g., compensation amount 104A-n for energy, time of day when a receiver system 163A-*n* is offering an increased compensation amount for energy (e.g., night time versus daytime, windy day versus calm day, and suchlike), whether a particular receiver system 163A-*n* is to be prioritized (e.g., grid 160 is undergoing a grid emergency), and suchlike. The respective reasons 350A-*n* can be captured as options 132A-*n* presented to entity 102A via HMI 186/ display 187 included in/communicatively coupled to BDS 110. In an example scenario, the battery pack 105 can be located onboard a vehicle (e.g., vehicle 210), with the selection component 130 presenting the respective options 132A-*n* via an onboard display/infotainment system (e.g., via a HMI 186/display 187, as further described). Entity 102A can make a selection from the presented options 132A-*n*, and the discharge operation can be initiated/schedule for subsequent discharge for energy 107A-*n*.

BDS 110 can further include a presentation component 131 configured to present any of current/prior/available discharge configurations 109A-*n*, prior/current reasons 350A-*n*, prior/current type/configuration of battery pack 105A-*n*, prior/current excess energy 107A-*n* to be discharged, prior/current available receiver systems 163A-*n*, prior/current receiver status 170A-*n*, historical data 190A-*n*, similarity indexes $S_{1-n}$, vectors $Vn$, and suchlike, on a HMI 186A (as further described).

BDS 110 can also include a data historian 133 configured to generate/update historical data 190A-*n* with any information regarding current/prior/available discharge configurations 109A-*n*, prior/current reasons 350A-*n*, prior/current type/configuration of battery pack 105A-*n*, prior/current excess energy 107A-*n* to be discharged, prior/current available receiver systems 163A-*n*, prior/current receiver status 170A-*n*, historical data 190A-*n*, similarity indexes $S_{1-n}$, vectors *Vn*, and suchlike, on a HMI 186 (as further described). Historical data 190A-*n* can be utilized by a process component 135/one or more AI/ML processes 137A-*n*, etc., to determine/recommend a potential discharge configuration 109A-*n* to discharge excess energy 107A-*n*.

Various communications 197A-*n* can be utilized across the BDS 110, between BDS 110 and battery pack 105, and further between BDS 110 and receiver systems 163A-*n*. Communications 197A-*n* can include notifications, instructions, selections, options 132A-*n*, receiver status 170A-*n*, priority reasons 360A-*n*, reasons 350A-*n*, selected amounts of energy 107A-*n* (e.g., per All buttons 330A-*n*, sliders 340A-*n*, of FIG. 3), and suchlike, e.g., as input by entity 102A-*n*, generated by respective components in BDS 110, components in any of the receiver systems 163A-*n*, and suchlike.

As mentioned, BDS 110 can also include respective systems to enable the excess energy 107 to safely discharge, via switch component 121, to the respective receiver system 163A-*n*, in accordance with any requirements, standards, etc., that may be in place to enable connection and/or discharging to the respective receiver system 163A-*n*. For example, to facilitate discharging to the grid 160, a charge controller 168 can be co-located with switch component 121 to enable discharged energy 107A-*n* to be in a required condition for discharging to any of the receiver systems 163A-*n*. Charge controller 168 can comprise any suitable technology/configuration to enable discharging energy 107A-*n*, e.g., voltage, current, phase, AC, DC, modulation, impedance, and suchlike, and further configured to operate with any required specification, standard, etc. For example, charge controller 168 can include an EVSE system, whereby the EVSE system can be configured to operate in accordance with any requirement, a local grid code, etc., e.g., *ISO 15118 Road Vehicles*, *VDE-AR-n 4105*, *EN 50549-1*, *ISO 3166-1*, *ISO 3166-2*, *IEC 61851*, *applicable grid code*, and suchlike (e.g., implemented on grid 160).

As further shown in FIG. 1B, BDS 110 and the receiver systems 163A-*n* can be respectively communicatively coupled to/comprise a computer system(s) 180A-*n*. For example, a computer system 180A is located at BDS 110, computer system 180M is located at microgrid 150, computer system 180V is located at vehicle 155, computer system 180G is located at grid 160, computer system 180O is located at other energy receiver 162, (computer system 180B is located at a second vehicle 210, per FIG. 2), and suchlike. Respective computer system 180A-*n* can include a respective memory 184A-*n* configured to store the respective computer executable components (e.g., discharge component 120, selection component 130, presentation component 131, data historian 133, process component 135 at BDS 110; MCC 152M at microgrid 150; VCC 152V at vehicle 155; GCC 152G at grid 160; and OCC 152O at the other energy receiver 162; and suchlike) and further, a respective processor 182A-*n* configured to execute the computer executable components stored in the memory 184A-*n*. Memory 184A-*n* can be further configured to store any of values of excess energy 107A-*n*, battery status 108A-*n*, receiver status 170A-*n*, discharge configurations 109A-*n*, options 132A-*n*, reasons 350A-*n*, selected receiver in option list 132A-*n*, ALL selection 330A-*n*, settings 340A-*n*, reasons 350A-*n*, communications 197A-*n* and content of communications 197A-*n*, processes 137A-*n*, historical data 190A-*n*, similarity indexes $S_{1-n}$, vectors *Vn*, and suchlike (as further described herein).

Respective computer systems 180A-*n* can further include a human machine interface (HMI) 186A-*n* (e.g., a display, a graphical-user interface (GUI)) which can be configured to present various information including current/prior/available discharge configurations 109A-*n*, prior/current reasons 350A-*n*, prior/current type/configuration of battery pack 105A-*n*, prior/current excess energy 107A-*n* to be discharged, prior/current available receiver systems 163A-*n*, prior/current receiver status 170A-*n*, historical data 190A-*n*, similarity indexes $S_{1-n}$, vectors *Vn*, and suchlike, (as further described) per the various embodiments presented herein. HMI 186A-*n* can include an interactive display/screen 187A-*n* to present the various information.

Computer systems 180A-*n* can further include an I/O component 188A-*n* to receive and/or transmit respectively current/prior/available discharge configurations 109A-*n*, prior/current reasons 350A-*n*, prior/current type/configuration of battery pack 105A-*n*, prior/current excess energy 107A-*n* to be discharged, prior/current available receiver systems 163A-*n*, prior/current receiver status 170A-*n*, historical data 190A-*n*, similarity indexes $S_{1-n}$, vectors *Vn*, and suchlike. Any suitable technology can be utilized for interaction/communication by I/O 188, e.g., file transfer protocol (FTP), simple radio standalone (SRS), and suchlike. While the forgoing relates to computer system 180A operating at BDS 110, the respective receiver systems 163A-*n* can also include computer systems 180B-*n*, as previously described, such that each respective computer system 180B-*n* comprises a respective processor 182B-*n*, memory 184B-*n*, HMI 186B-*n*, display 187B-*n*, I/O 188B-*n*.

BDS 110 can further include a process component 135, wherein process component 135 can be further configured to implement artificial intelligence (AI) and machine learning (ML) processes 137A-*n*. It is to be appreciated that processes 137A-n can comprise any AI/ML model/technology/technique/architecture utilized to automatically monitor/control operation of discharging excess energy 107A-*n* between battery pack 105 and receiver system(s) 163A-*n*. Process component 135 can be utilized to implement processes 137A-*n* in conjunction with any of the other components included in BDS 110, discharge component 120, selection component 130, and suchlike, and further generate/determine/infer excess energy 107A-*n*, battery status 108A-*n*, discharge configuration 109A-*n*, available receiver systems 163A-*n*, receiver status 170A-*n*, options 132A-*n*, reasons 350A-*n*, settings 340A-*n*, prior configurations/information in historical data 190A-*n*, and suchlike (as further described).

FIG. 2, schematic 200, presents an example configuration of a first EV discharging power to a second EV, in accordance with an embodiment. As shown, a first vehicle 210 can be electrically coupled to BDS 110, wherein vehicle 210 includes battery pack 105P. A second vehicle 155 can also be electrically coupled to BDS 110, as previously described, where second vehicle 155 is included in the one or more receiver systems 163A-*n*. Energy storage device 151V on vehicle 155 can be a battery pack comparable to battery pack 105P. In an example embodiment, VCC 152V can include a battery management system (BMS) configured to monitor/control operation of storage device 151V, monitoring such parameters as voltage, temperature, current, etc., as previously described, to prevent overcharging, overheating, and suchlike. Vehicle 210 can similarly include a controller component, VCC2 152B, and a computer system 180B. Vehicles 155 and 210 can be coupled to BDS 110 via cables 116A-*n* with plugs 117A-*n* in a port 118A-*n* onboard respective vehicles 155 and 210, wherein cables 116A-*n* in conjunction with VCC1 152B/VCC 152V enable respective communications, handshakes, charging protocols, etc., to be established/initiated with BDS 110/discharge component 120 to enable discharging of energy 107A-*n* from vehicle 210 to vehicle 155.

FIG. 3A, schematic 300A, presents an example of a screen/display enabling selection of one or more energy receivers, in accordance with an embodiment. Any suitable screen configuration can be utilized by various screens 310A-*n*, to convey list of options 132A-*n* and enable selection of one or more receiver systems 163A-*n*, and suchlike. Screen 310A can be presented on HMI 186/display 187A-*n*. As previously mentioned, HMI 186 can be integrated into BDS 110, incorporated into a vehicle 155/210 as part of an infotainment system, and suchlike.

Any suitable screen configuration can be utilized to convey the respective option list 132A-*n* regarding the respective receiver systems 163A-*n*, and any information pertaining to selection of a particular receiver system 163A-*n*. Information regarding a respective receiver system 163A-*n* can be presented as one or more reasons 350A-*n*, wherein the one or more reasons 350A-*n* can include such considerations as payment/compensation 104A-*n* for the energy 107A-*n* offered by respective receiver systems 163A-*n*), enable selection of one or more receiver systems 163A-*n* (e.g., via buttons 320A-*n*), whether all of the energy 107A-*n* is to go to a particular receiver system 163A-*n* (e.g., via buttons 330A-*n*), respective amounts of energy 107A-*n* to be provided to each of the selected receiver systems 163A-*n* (e.g., by value sliders 340A-*n*, or similar functionality/feature), and suchlike.

As further shown on FIG. 3A, various reasons 360A-*n* can be presented, whereby the various reasons 360A-*n* can be utilized to initially enable a determination (e.g., by discharge component 120) regarding whether an entity 102 prefers to prioritize available receiver systems 163A-*n* based on, for example, price 360P, discharging rate 360R (e.g., can discharge of energy 107A-*n* be performed while entity 102A waits, or should entity 102A return at a later time?), a scheduled time 360T (e.g., can discharge of energy 107A-*n* be performed immediately?, to be scheduled?, and suchlike), or an other concern 360O of interest to the entity 102. Priority reasons 360A-*n* can be buttons on screen 310, such that when selected, the respective options can be can be ranked according to appropriateness to the selected priority reason 360A-*n*. Hence, with price 360P selected, a first reason 350A relating to microgrid 150 can be presented, a second reason 350E relating to energy grid 160 can be presented, whereby first reason 350A indicates that the microgrid 150 will pay less than the amount paid by the grid 160 for energy 107A-*n*, per second reason 350E. Hence, second reason 350E can be presented in green, while first reason 350A is presented in amber, such that entity 102 can easily determine the better payment 104A-*n*, and accordingly, can select grid 160 to discharge energy 107A to.

FIG. 3B, schematic 300B, presents an example of a screen/display during a grid emergency occurring, in accordance with an embodiment. Screen 310B can be presented on HMI 186/display 187A-*n*. As previously mentioned, grid 160 can be undergoing a grid emergency, with BDS 110 configured to prioritize discharging excess energy 107 to grid 160 to assist in enabling grid 160 recover from the grid emergency. Accordingly, a message 370A-*n* can be presented on screen 310B indicating the grid emergency condition of grid 160 and discharge priority being given to grid 160. Approval, e.g., by entity 102, to discharge energy 107A-*n* to grid 160 can be provided via selection of "approve energy discharge" button 375.

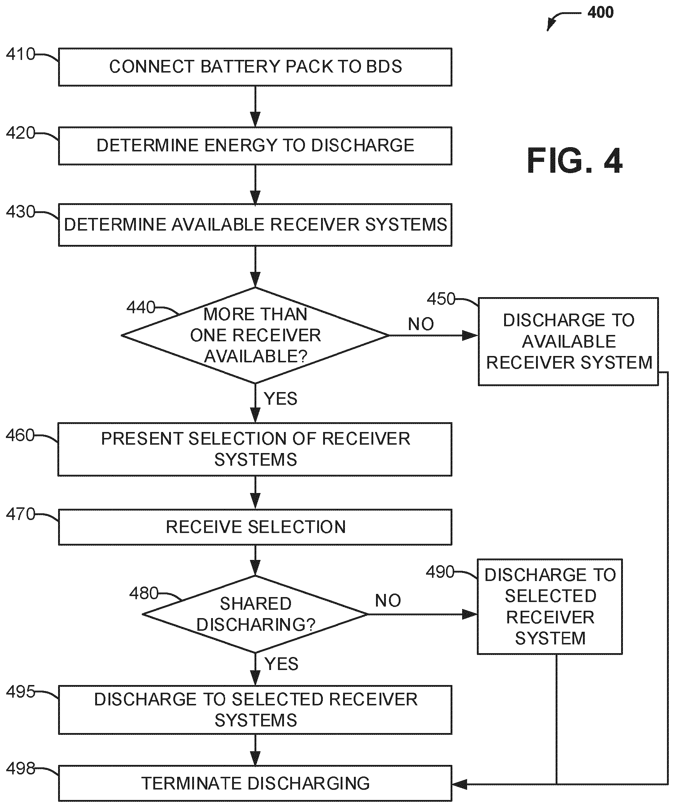

FIG. 4, flowchart 400, presents a computer-implemented method for discharging energy from a battery pack, in accordance with an embodiment.

At 410, a battery pack (e.g., battery pack 105) can be connected to a BDS (e.g., BDS 110). Any suitable method of connection can be utilized to electrically couple the battery pack to the BDS.

At 420, a discharge component (e.g., discharge component 120) can be configured to assess a current operating condition of the battery pack, and further configured to determine an amount of excess energy (e.g., energy 107A-*n*) available to be discharged from the battery pack.

At 430, the discharge component can be further configured to determine what energy receiver systems (e.g., one or more of energy receivers 163A-*n*, e.g., microgrid 150, vehicle 155, grid 160, other energy receiver 162, and suchlike) are available to receive the excess energy discharged from the battery pack. Information regarding the available energy receivers can be presented (e.g., list of options 132A-*n*, reasons 350A-*n*, and suchlike via screens 310A-*n*).

At 440, the discharge component can be configured to determine whether more than one receiver system is available. In response to a determination that NO, only one receiver system (e.g., microgrid 150) is available to discharge the excess energy to, method 400 can advance to step 450, whereupon the discharge component can commence discharge of the excess energy to the available receiver system. Method 400 can further advance to step 498 for completion of discharging.

At 440, in response to a determination by the discharge component that YES, more than one receiver systems are available, method 400 can advance to step 460, whereupon the available receivers can be presented on the screen (e.g., per example screen 310A).

At 470, the discharge component can be further configured to receive one or more inputs via the screen. For example, the discharge component can detect which of the receivers have been selected (e.g., via buttons 320A-*n*), whether all of the energy is to be discharged to a single receiver (e.g., via ALL buttons 330A-*n*), respective amounts of energy (e.g., via sliders 340A-*n*) selected to be discharged to the respective receivers, e.g., when a shared discharge operation is implemented, and suchlike.

At 480, the discharge component can be further configured to determine (from the selected inputs of step 470) whether a shared discharge operation is to be performed. In response to a determination that NO, shared discharging has not been selected, e.g., one of the ALL buttons has been selected, method 400 can advance to step 490, whereupon the discharge component can be configured to initiate discharging of the excess energy to the selected receiver. Method 400 can further advance to step 498 for completion of discharging.

At 480, in response to a determination that YES, shared discharging has been selected, e.g., more than one of the receiver option buttons (e.g., buttons 320A-*n*) have been selected and/or respective % discharge sliders have been selected/set to the respective amount of discharge of energy from the battery pack, method 400 can advance to step 495, whereupon the discharge component can be configured to initiate discharging of the excess energy to the selected receivers. In an embodiment, discharging can be performed to a first receiver, and upon discharging the selected % of excess energy, discharging is terminated at the first receiver, with discharging to the second receiver being initiated.

At 498, upon the respective discharging operation being performed, and the excess energy has been discharged to one or more of the receiver systems, discharging can be terminated when the battery pack (e.g., battery pack 105) is in a required condition for testing, e.g., has a required level of electrical energy (e.g., zero, 5% energy, and suchlike) for testing of the battery pack to be performed. In an embodiment, a battery testing system can be included in the BDS for use with the battery pack connected, or the battery testing system can be separate from the BDS. Upon completion of discharging, payment of compensation (e.g., compensation 104A-*n*) can be made to an account (e.g., user account 103A-*n*).

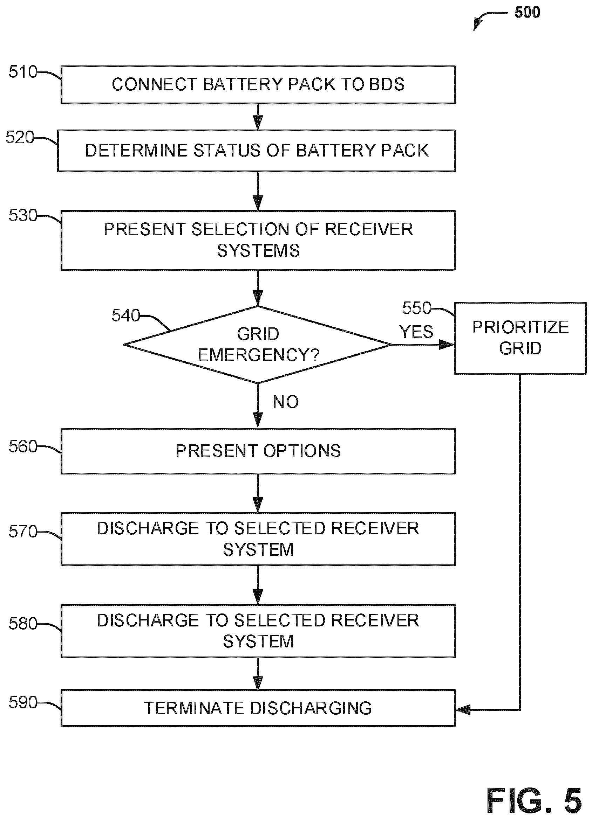

FIG. 5, flowchart 500, presents a computer-implemented method for prioritizing battery pack discharging, in accordance with an embodiment.

At 510, a battery pack (e.g., battery pack 105) can be connected to a BDS (e.g., BDS 110). Any suitable method of connection can be utilized to electrically couple the battery pack to the BDS.

At 520, a discharge component (e.g., discharge component 120) can be configured to assess a current operating condition of the battery pack, and further configured to determine an amount of excess energy (e.g., energy 107A-*n*) available to be discharged from the battery pack.

At 530, the discharge component can be further configured to determine what energy receiver systems (e.g., one or more of energy receivers 163A-*n*, e.g., microgrid 150, vehicle 155, grid 160, other energy receiver 162, and suchlike) are available to receive the excess energy discharged from the battery pack. Information regarding the available energy receivers can be presented (e.g., list of options 132A-*n*, reasons 350A-*n*, and suchlike via screens 310A-*n*).

At 540, the discharge component can be further configured to determine a current operational condition of the grid (e.g., grid 160), and whether the grid is undergoing a grid emergency? In response to a determination that YES, the grid is undergoing a grid emergency, method 500 can advance to step 550, whereupon the discharge component can be configured to prioritize the grid for discharging of the battery pack, and further initiate discharge of the excess energy to the grid. Method 500 can advance to 590, whereupon discharging to the grid can be terminated.

At 540, in response to a determination that NO, the grid is not in an emergency condition, method 500 can advance to step 560, whereupon the available receivers can be presented on the screen (e.g., list of options 132A-*n*, reasons 350A-*n*, and suchlike via screens 310A-*n*), in conjunction with the respective options available for discharge, e.g., microgrid, vehicle, grid, other system.

At 570, the discharge component can be further configured to receive one or more inputs via the screen. For example, the discharge component can detect which of the receivers have been selected (e.g., via buttons 320A-*n*), whether all of the energy is to be discharged to a single receiver (e.g., via ALL buttons 330A-*n*), respective amounts of energy (e.g., via sliders 340A-*n*) selected to be discharged to the respective receivers, e.g., when a shared discharge operation is implemented, and suchlike.

At 580, the discharge component can be configured to initiate discharging of the excess energy to the selected receiver. Method 500 can further advance to step 590 for completion of discharging and payment of compensation (e.g., compensation 104A-*n*).

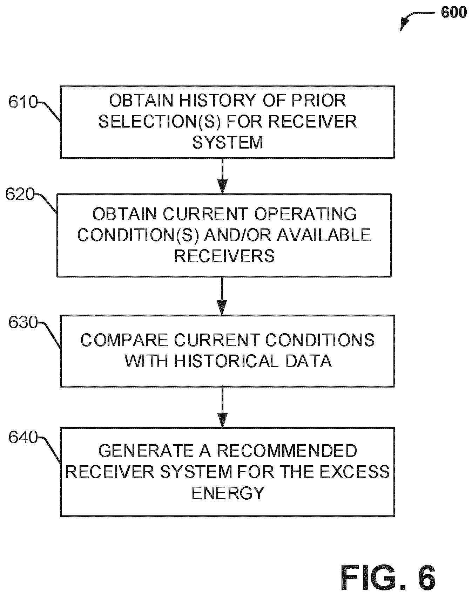

FIG. 6, flowchart 600, presents a computer-implemented method for recommending a battery pack discharging receiver/process, in accordance with an embodiment.

At 610, a prior discharge history (e.g., historical data 190) of receiver systems (e.g., receiver systems 163A-*n*) that have been previously selected for discharging excess energy (e.g., energy 107A-*n*) from a battery pack (e.g., battery pack 105), via a BDS (e.g., BDS 110) can be compiled (e.g., by a discharge component 120). For example, a prior discharge may have been directed towards a microgrid, or the grid, another vehicle, etc.

At 620, a discharge component can be further configured to determine currently available receivers (e.g., receiver systems 163A-*n* connected to the BDS), operating conditions, and suchlike.

At 630, the discharge component can be further configured to compare the prior discharge history with currently available receiver systems, operating condition of the currently available receiver systems, current operating condition of the battery pack, and suchlike. AI and ML techniques and technologies (e.g., available with process component 135 and processes 137A-*n*) can be utilized to assist the discharge component in comparing the prior discharge history with the current operating condition of the battery pack/available receiver systems, e.g., to identify a preferred receiver system, discharging based on immediate availability of discharging rather than based on cost, timing, etc.,

At 640, the discharge component (e.g., in conjunction with process component 135 and processes 137A-*n*) can be configured to generate a recommendation for one or more receiver systems to discharge the excess energy to. In an embodiment, the recommendation can be presented on the display (e.g., HMI 186, display 187).

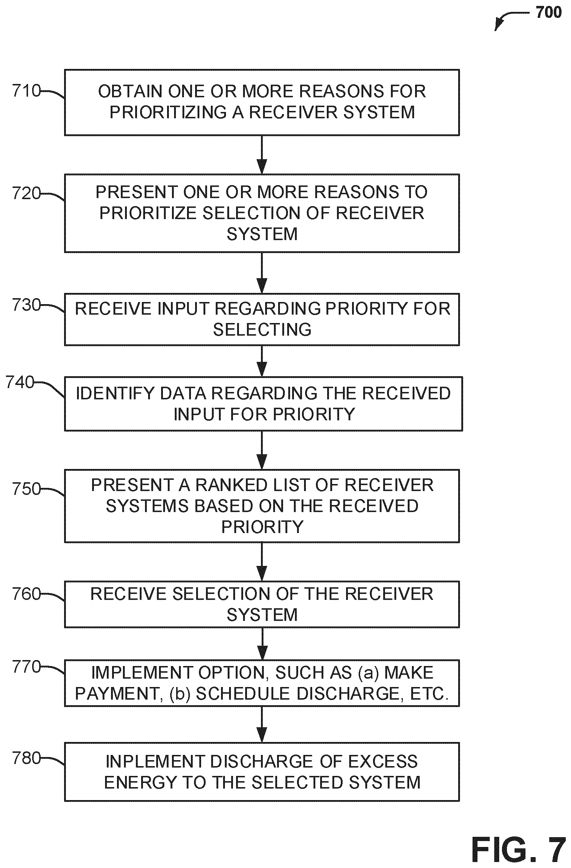

FIG. 7, flowchart 700, presents a computer-implemented method for prioritizing battery pack discharging, in accordance with an embodiment.

At 710, information (e.g., options 132A-*n*, receiver status 170A-*n*, etc.) regarding respective receiver systems (e.g., receiver systems 163A-*n*) can be obtained/received (e.g., at BDS 110).

At 720, one or more priority reasons (e.g., priority reasons 360A-n) can be a presented (e.g., by presentation component 131) on a screen (e.g., HMI 186/display 187), wherein the one or more priority reasons can be utilized to aid determination/selection of a receiver system (e.g., receiver system 163A-*n*) to which excess energy (e.g., excess energy 107A-*n*) of a battery pack (e.g., battery pack 105) can be discharged to. Any suitable parameters can be used for the one or more priority reasons, whereby such parameters can be, in a non-limiting list, a payment/compensation amount (e.g., compensation 104A-*n*) for the energy, a time to discharge the excess energy, and suchlike.

At 730, an input (e.g., any of priority reasons 360A-*n* selected) can be received (e.g., from an entity 102A-*n*) via the screen (e.g., detected via presentation component 131).

At 740, the input can be analyzed (e.g., by discharge component 120, presentation component 131), and reasons can be prioritized based on the selected input, e.g., the receiver systems are ranked high to low based on payment, based on time to discharge, based on energy credit, and suchlike.

At 750, the ranked systems can be presented on the screen in conjunction with associated reasons (e.g., reasons 360A-*n*), e.g., a first reason associated with a first receiver system is presented in green in conjunction with a first payment amount, a second reason associated with a second receiver system is presented in amber in conjunction with a second payment amount, a third reason associated with a third receiver system is presented in yellow in conjunction with a third payment amount, and suchlike, whereby the first payment amount is greater than the second payment amount, and the second payment amount is greater than the third payment amount, and suchlike. Accordingly, it is readily apparent which receiver system is offering the highest compensation for the excess energy and which is offering the worst compensation, e.g., for a given reason.

At 760, an input (e.g., button 320A-*n*) can be received (e.g., from an entity 102A*n*) at the screen. The input can be a selection of which of the receiver systems has been selected to receive the discharged excess energy.

At 770, the selected option can be implemented, such as make payment for the excess energy (e.g., to an account 103A associated with entity 102A-*n*), enter a credit for the excess energy (e.g., to an account 103A associated with entity 102A-*n*), scheduling the discharge for any of *immediate*, *as soon as possible*, at a *later time*, and suchlike (e.g., as scheduled by discharge component 120).

At 780, the discharge of the excess energy can be initiated/scheduled (e.g., by discharge component 120), whereby the discharge is to the selected receiver system.

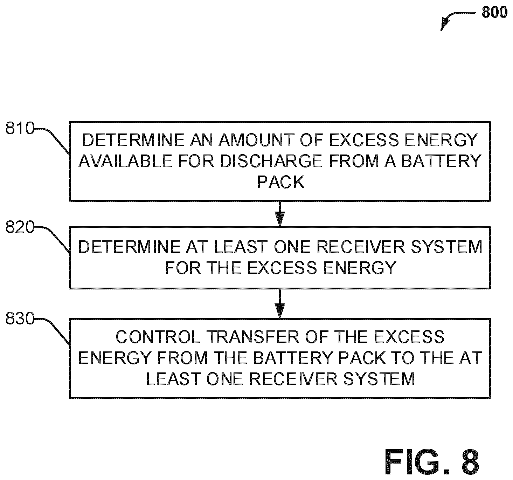

FIG. 8 presents a flowchart 800 of a computer-implemented method for discharging excess energy from a battery pack to one or more receiver systems, in accordance with an embodiment.

At 810, process 800 can comprise a system (e.g., BDS 110) comprising a memory (e.g., memory 184, a computer readable storage medium having program instructions embodied therewith) that stores computer executable components and a processor (e.g., a processor 182, to execute the program instructions) configured to execute the computer executable components stored in the memory. The computer executable components can comprise a battery discharge component (e.g., battery discharge component 120) configured to determine an amount of excess energy (e.g. excess energy 107A-n) available for discharge from a battery pack (e.g., battery pack 105).

At 820, the battery discharge component can be further configured to determine at least one receiver system (e.g., receiver systems 163A-n) for the excess energy.

At 830, the battery discharge component can be further configured to control transfer of the excess energy from the battery pack to the at least one receiver system.

APPLICATION/IMPLEMENTATION OF AI & ML

As mentioned, the various embodiments presented herein can utilize various artificial intelligence/machine learning (AI/ML) model/technology/technique/architecture (e.g., process component 135 implementing processes 137A-$n$). AI/ML technologies and techniques can be configured to determine information, make inferences, predictions, etc., regarding discharging of energy 107A-$n$ from a battery pack 105. Processes 137A-$n$ can include AI, ML, and reasoning techniques/technologies that employ probabilistic and/or statistical-based analysis to prognose or infer an action that an entity desires to be automatically performed for carrying out various aspects thereof, e.g., determining battery status 108A-$n$, determining excess energy 107A-$n$, determining a discharge configuration 109A-$n$, determining options 132A-$n$, determining receiver status 170A-$n$, and suchlike, which as mentioned, can be facilitated via an automatic classifier system and process.

As used herein, the terms "predict", "infer", "inference", "determine", and suchlike, refer generally to the process of reasoning about or inferring states of the system, environment, and/or user from a set of observations as captured via events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

A classifier is a function that maps an input attribute vector, $x = (x1, x2, x3, x4, xn)$, to a class label class($x$). The classifier can also output a confidence that the input belongs to a class, that is, $f(x) = $ confidence(class($x$)). Such classification can employ a probabilistic and/or statistical-based analysis (e.g., factoring into the analysis utilities and costs) to prognose or infer an action that a user desires to be automatically performed (e.g., selecting receiver systems 163A-$n$ to discharge energy 107A-$n$ to, and suchlike).

A support vector machine (SVM) is an example of a classifier that can be employed. The SVM operates by finding a hypersurface in the space of possible inputs that splits the triggering input events from the non-triggering events in an optimal way. Intuitively, this makes the classification correct for testing data that is near, but not identical to training data. Other directed and undirected model classification approaches include, e.g., naive Bayes, Bayesian networks, decision trees, neural networks, fuzzy logic models, and probabilistic classification models providing different patterns of independence can be employed. Classification as used herein is inclusive of statistical regression that is utilized to develop models of priority.

As will be readily appreciated from the subject specification, the various embodiments can employ classifiers that are explicitly trained (e.g., via a generic training data) as well as implicitly trained (as further described below). For example, SVM's are configured via a learning or training phase within a classifier constructor and feature selection module, e.g., included in process component 135. Thus, the classifier(s) can be used to automatically learn and perform a number of functions, including but not limited to determining according to predetermined criteria, e.g., selecting receiver systems 163A-$n$ to discharge energy 107A-$n$ to, and suchlike.

In an example embodiment, processes 137A-$n$ can be trained/fine-tuned with previously obtained/generated data (e.g., in historical data 190A-$n$). Fine-tuning of a process 137A-$n$ can comprise application of a current/prior discharge configurations 109A-$n$/historical data 190A-$n$ in conjunction with any current considerations, and suchlike, to the process 137A-$n$, process 137A-$n$ is correspondingly adjusted by application of the current/prior discharge configurations 109A-$n$, and suchlike, such that, for example, weightings in the process 137A-$n$ are adjusted by application of the current/prior discharge configurations 109A-$n$/historical data 190A-$n$ and suchlike. During training, prior decisions, prior observations, determinations, etc., can be applied to the processes 137A-$n$, enabling the processes 137A-$n$ to be trained regarding the various options available for selection, and, based on various conditions/situations/scenarios, which option was ultimately selected for each scenario. Accordingly, when new information is provided (e.g., amount of excess energy 107A-$n$ to be discharged from battery 105; receiver systems 163A-$n$ available to receive the excess energy 107A-$n$; operating status 108A-$n$ of the battery pack 105; operating status of the respective receiver system 163A-$n$; previously utilized discharge configuration 109A-$n$; options 132A-$n$ available and/or selected (e.g., by entity 102); priority reason 360A-$n$ available and selected (e.g., by entity 102); where energy 107A-$n$ was shared between receiver systems 163A-$n$ (e.g., via % selectors 340A-$n$), the respective % of energy 107A-$n$ shared with each of the selected receiver systems 163A-$n$; and suchlike). Accordingly, when a present discharge operation of battery 105 is to be performed, process component 135 can be configured to:

(a) utilize one or more pertinent processes 137A-$n$,

(b) apply/compare current conditions (e.g., amount of excess energy 107A-*n* to be discharged, available receiver systems 163A-*n*, operating status 108A-*n* of battery 105, operating status 170A-*n* of respective receiver systems 163A-*n*, and suchlike) with the prior conditions (e.g., in historical data 190A-n), and

(c) generate an inference/determination (e.g., an inferred discharge configuration 109A-*n*) regarding which of one or more receiver systems 163A-*n* the excess energy 107A-*n* is to be discharged to.

As previously mentioned, process component 135 can be utilized to implement processes 137A-*n* in conjunction with any of the components included in BDS 110, e.g., discharge component 120, selection component 130, presentation component 131, data historian 133, charge controller 168, and suchlike.

It is to be appreciated that the various processes 137A-*n* and operations presented herein are simply examples of respective AI and ML operations and techniques, and any suitable technology can be utilized in accordance with the various embodiments presented herein. In an example embodiment, process component 135/processes 137A-*n* can be applied to any of in the respective prior/current/future battery status 108A-*n*, excess energy 107A-*n*, discharge configuration 109A-*n*, options 132A-*n*, receiver status 170A-*n*, historical data 190A-*n*, and suchlike. Wherein, process component 135/processes 137A-*n* can include a vector component to apply any suitable vectoring technology, such as, in a non-limiting list, bag of words (BOW) text vectors, Euclidean distance, cosine similarity, vector representation via term frequency-inverse document frequency (tf-idf) capturing term/token frequency (e.g., common terms across prior/current/future knowledge), neural network embedding layer vector representation of terms/categories (e.g., common terms having different tense), a transformer neural network, bidirectional and auto-regressive transformer (BART) model architecture, a bidirectional encoder representation from transformers (BERT) model, long short term memory network (LSTM) operation(s), a sentence state LSTM (S-LSTM), a deep learning algorithm, a sequential neural network, a sequential neural network that enables persistent information, a recurrent neural network (RNN), a convolutional neural network (CNN), a neural network, capsule network, a machine learning algorithm, a natural language processing (NLP) technique, sentiment analysis, bidirectional LSTM (BiLSTM), stacked BiLSTM, regular pattern expression matching, and suchlike. Language models, LSTMs, BARTs, etc., can be formed with a neural network that is highly complex, for example, comprising billions of weighted parameters.

Accordingly, in an embodiment, implementation of the BDS 110 and included/associated components, with processes 137A-*n*, enables natural language processing (NLP) (e.g., utilizing vectors) to be implemented to generate and utilize a proposed discharge configuration 109A-*n*, wherein the determined discharge configuration 109A-*n* can be presented on HMI 186/screen 187A-*n* for review/selection by entity 102.

During application of processes 137A-*n*, vector representations $V_{1-n}$ can be applied to any of prior and current prior/current/future battery status 108A-*n*, excess energy 107A-*n*, discharge configuration 109A-*n*, options 132A-*n*, receiver status 170A-*n*, historical data 190A-*n*, and suchlike, such that vector similarity operations (e.g., vector clustering/distancing) can be applied to generate a proposed discharge configuration 109A-*n* from the accrued prior knowledge regarding generation and implementation of prior discharge configurations 109A-*n*, per historical data 190A-*n*. The degree of similarity (e.g., via similarity indexes $S_{1-n}$) between respective information can be determined, for example, based on a threshold reflecting a proximity of a first vector generated from information pertaining to discharging excess energy 107A-*n* to a receiver system 163A-*n*, and a second vector generated from information pertaining to a prior discharge configuration 109A-*n*, enabling ranking of similarity, e.g., via vector quantization, of one or more proposed discharge configurations 109A-*n*.

It is to be appreciated that while any of discharge component 120, selection component 130, presentation component 131, data historian 133, process component 135, and suchlike, can function as separate components/implemented independently, the respective components and functionality can be combined into a single component, such as discharge component 120 operating as a single, high-level component, with one or more of selection component 130, presentation component 131, data historian 133, presentation component 131, operating as a sub-component of discharge component 120.

EXAMPLE OPERATING ENVIRONMENT AND SCENARIOS

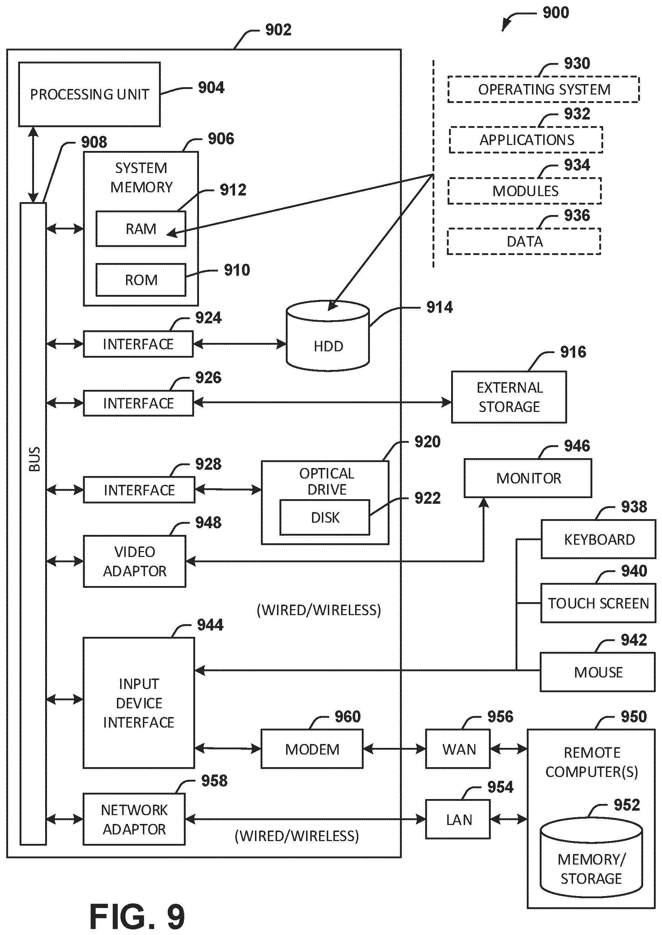

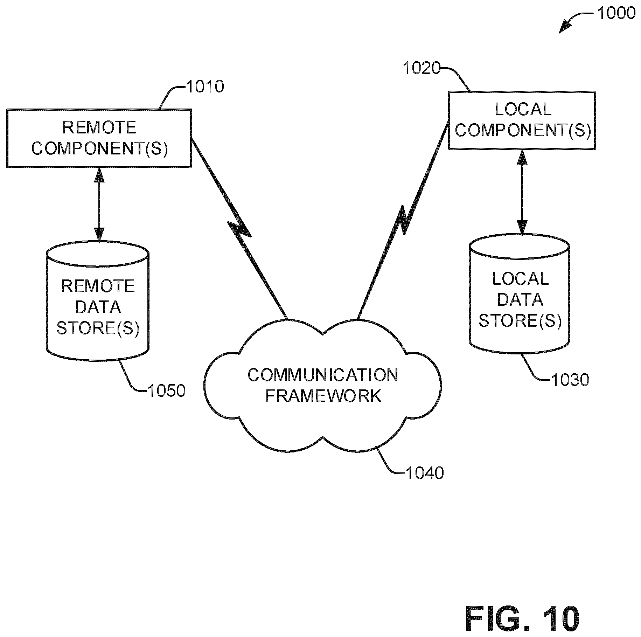

Turning next to FIGS. 9 and 10, a detailed description is provided of additional context for the one or more embodiments described herein with FIGS. 1-8.

In order to provide additional context for various embodiments described herein, FIG. 9 and the following discussion are intended to provide a brief, general description of a suitable computing environment 900 in which the various embodiments described herein can be implemented. While the embodiments have been described above in the general context of computer-executable instructions that can run on one or more computers, those skilled in the art will recognize that the embodiments can be also implemented in combination with other program modules and/or as a combination of hardware and software.

Generally, program modules include routines, programs, components, data structures, etc., that perform particular tasks or implement particular abstract data types. Moreover, those skilled in the art will appreciate that the methods can be practiced with other computer system configurations, including single-processor or multiprocessor computer systems, minicomputers, mainframe computers, IoT devices, distributed computing systems, as well as personal computers, hand-held computing devices, microprocessor-based or programmable consumer electronics, and the like, each of which can be operatively coupled to one or more associated devices.

The embodiments illustrated herein can be also practiced in distributed computing environments where certain tasks are performed by remote processing devices that are linked through a communications network. In a distributed computing environment, program modules can be located in both local and remote memory storage devices.

Computing devices typically include a variety of media, which can include computer-readable storage media, machine-readable storage media, and/or communications media, which two terms are used herein differently from one another as follows. Computer-readable storage media or machine-readable storage media can be any available storage media that can be accessed by the computer and includes both volatile and nonvolatile media, removable and non-removable media. By way of example, and not limitation, computer-readable storage media or machine-readable storage media can be implemented in connection with any method or technology for storage of information such as computer-readable or machine-readable instructions, program modules, structured data or unstructured data.

Computer-readable storage media can include, but are not limited to, random access memory (RAM), read only memory (ROM), electrically erasable programmable read only memory (EEPROM), flash memory or other memory technology, compact disk read only memory (CD-ROM), digital versatile disk (DVD), Blu-ray disc (BD) or other optical disk storage, magnetic cassettes, magnetic tape, magnetic disk storage or other magnetic storage devices, solid state drives or other solid state storage devices, or other tangible and/or non-transitory media which can be used to store desired information. In this regard, the terms "tangible" or "non-transitory" herein as applied to storage, memory or computer-readable media, are to be understood to exclude only propagating transitory signals per se as modifiers and do not relinquish rights to all standard storage, memory or computer-readable media that are not only propagating transitory signals per se.

Computer-readable storage media can be accessed by one or more local or remote computing devices, e.g., via access requests, queries or other data retrieval protocols, for a variety of operations with respect to the information stored by the medium.

Communications media typically embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, infra-red and other wireless media.

It is to be understood that when an element is referred to as being "coupled" to another element, it can describe one or more different types of coupling including, but not limited to, chemical coupling, communicative coupling, electrical coupling, electromagnetic coupling, operative coupling, optical coupling, physical coupling, thermal coupling, and/or another type of coupling. Likewise, it is to be understood that when an element is referred to as being "connected" to another element, it can describe one or more different types of connecting including, but not limited to, electrical connecting, electromagnetic connecting, operative connecting, optical connecting, physical connecting, thermal connecting, and/or another type of connecting.

With reference again to FIG. 9, the example environment 900 for implementing various embodiments of the aspects described herein includes a computer 902, the computer 902 including a processing unit 904, a system memory 906 and a system bus 908. The system bus 908 couples system components including, but not limited to, the system memory 906 to the processing unit 904. The processing unit 904 can be any of various commercially available processors and may include a cache memory. Dual microprocessors and other multi-processor architectures can also be employed as the processing unit 904.

The system bus 908 can be any of several types of bus structure that can further interconnect to a memory bus (with or without a memory controller), a peripheral bus, and a local bus using any of a variety of commercially available bus architectures. The system memory 906 includes ROM 910 and RAM 912. A basic input/output system (BIOS) can be stored in a non-volatile memory such as ROM, erasable programmable read only memory (EPROM), EEPROM, which BIOS contains the basic routines that help to transfer information between elements within the computer 902, such as during startup. The RAM 912 can also include a high-speed RAM such as static RAM for caching data.

The computer 902 further includes an internal hard disk drive (HDD) 914 (e.g., EIDE, SATA), one or more external storage devices 916 (e.g., a magnetic floppy disk drive (FDD) 916, a memory stick or flash drive reader, a memory card reader, etc.) and an optical disk drive 920 (e.g., which can read or write from a CD-ROM disc, a DVD, a BD, etc.). While the internal HDD 914 is illustrated as located within the computer 902, the internal HDD 914 can also be configured for external use in a suitable chassis (not shown). Additionally, while not shown in environment 900, a solid-state drive (SSD) could be used in addition to, or in place of, an HDD 914. The HDD 914, external storage device(s) 916 and optical disk drive 920 can be connected to the system bus 908 by an HDD interface 924, an external storage interface 926 and an optical drive interface 928, respectively. The interface 924 for external drive implementations can include at least one or both of Universal Serial Bus (USB) and Institute of Electrical and Electronics Engineers (IEEE) 1394 interface technologies. Other external drive connection technologies are within contemplation of the embodiments described herein.

The drives and their associated computer-readable storage media provide nonvolatile storage of data, data structures, computer-executable instructions, and so forth. For the computer 902, the drives and storage media accommodate the storage of any data in a suitable digital format. Although the description of computer-readable storage media above refers to respective types of storage devices, it should be appreciated by those skilled in the art that other types of storage media which are readable by a computer, whether presently existing or developed in the future, could also be used in the example operating environment, and further, that any such storage media can contain computer-executable instructions for performing the methods described herein.

A number of program modules can be stored in the drives and RAM 912, including an operating system 930, one or more application programs 932, other program modules 934 and program data 936. All or portions of the operating system, applications, modules, and/or data can also be cached in the RAM 912. The systems and methods described herein can be implemented utilizing various commercially available operating systems or combinations of operating systems.

Computer 902 can optionally comprise emulation technologies. For example, a hypervisor (not shown) or other intermediary can emulate a hardware environment for operating system 930, and the emulated hardware can optionally be different from the hardware illustrated in FIG. 9. In such an embodiment, operating system 930 can comprise one virtual machine (VM) of multiple VMs hosted at computer 902. Furthermore, operating system 930 can provide runtime environments, such as the Java runtime environment or the .NET framework, for applications 932. Runtime environments are consistent execution environments that allow applications 932 to run on any operating system that includes the runtime environment. Similarly, operating system 930 can support containers, and applications 932 can be in the form of containers, which are lightweight, standalone, executable packages of software that include, e.g., code, runtime, system tools, system libraries and settings for an application.

Further, computer 902 can comprise a security module, such as a trusted processing module (TPM). For instance with a TPM, boot components hash next in time boot components, and wait for a match of results to secured values, before loading a next boot component. This process can take place at any layer in the code execution stack of computer 902, e.g., applied at the application execution level or at the operating system (OS) kernel level, thereby enabling security at any level of code execution.

A user can enter commands and information into the computer 902 through one or more wired/wireless input devices, e.g., a keyboard 938, a touch screen 940, and a pointing device, such as a mouse 942. Other input devices (not shown) can include a microphone, an infra-red (IR) remote control, a radio frequency (RF) remote control, or other remote control, a joystick, a virtual reality controller and/or virtual reality headset, a game pad, a stylus pen, an image input device, e.g., camera(s), a gesture sensor input device, a vision movement sensor input device, an emotion or facial detection device, a biometric input device, e.g., fingerprint or iris scanner, or the like. These and other input devices are often connected to the processing unit 904 through an input device interface 944 that can be coupled to the system bus 908, but can be connected by other interfaces, such as a parallel port, an IEEE 1394 serial port, a game port, a USB port, an IR interface, a BLUETOOTH® interface, etc.

A monitor 946 or other type of display device can be also connected to the system bus 908 via an interface, such as a video adapter 948. In addition to the monitor 946, a computer typically includes other peripheral output devices (not shown), such as speakers, printers, etc.

The computer 902 can operate in a networked environment using logical connections via wired and/or wireless communications to one or more remote computers, such as a remote computer(s) 950. The remote computer(s) 950 can be a workstation, a server computer, a router, a personal computer, portable computer, microprocessor-based entertainment appliance, a peer device or other common network node, and typically includes many or all of the elements described relative to the computer 902, although, for purposes of brevity, only a memory/storage device 952 is illustrated. The logical connections depicted include wired/wireless connectivity to a local area network (LAN) 954 and/or larger networks, e.g., a wide area network (WAN) 956. Such LAN and WAN networking environments are commonplace in offices and companies, and facilitate enterprise-wide computer networks, such as intranets, all of which can connect to a global communications network, e.g., the internet.

When used in a LAN networking environment, the computer 902 can be connected to the local network 954 through a wired and/or wireless communication network interface or adapter 958. The adapter 958 can facilitate wired or wireless communication to the LAN 954, which can also include a wireless access point (AP) disposed thereon for communicating with the adapter 958 in a wireless mode.

When used in a WAN networking environment, the computer 902 can include a modem 960 or can be connected to a communications server on the WAN 956 via other means for establishing communications over the WAN 956, such as by way of the internet. The modem 960, which can be internal or external and a wired or wireless device, can be connected to the system bus 908 via the input device interface 944. In a networked environment, program modules depicted relative to the computer 902 or portions thereof, can be stored in the remote memory/storage device 952. It will be appreciated that the network connections shown are example and other means of establishing a communications link between the computers can be used.

When used in either a LAN or WAN networking environment, the computer 902 can access cloud storage systems or other network-based storage systems in addition to, or in place of, external storage devices 916 as described above. Generally, a connection between the computer 902 and a cloud storage system can be established over a LAN 954 or WAN 956 e.g., by the adapter 958 or modem 960, respectively. Upon connecting the computer 902 to an associated cloud storage system, the external storage interface 926 can, with the aid of the adapter 958 and/or modem 960, manage storage provided by the cloud storage system as it would other types of external storage. For instance, the external storage interface 926 can be configured to provide access to cloud storage sources as if those sources were physically connected to the computer 902.

The computer 902 can be operable to communicate with any wireless devices or entities operatively disposed in wireless communication, e.g., a printer, scanner, desktop and/or portable computer, portable data assistant, communications satellite, any piece of equipment or location associated with a wirelessly detectable tag (e.g., a kiosk, news stand, store shelf, etc.), and telephone. This can include Wireless Fidelity (Wi-Fi) and BLUETOOTH® wireless technologies. Thus, the communication can be a predefined structure as with a conventional network or simply an ad hoc communication between at least two devices.

The above description includes non-limiting examples of the various embodiments. It is, of course, not possible to describe every conceivable combination of components or methodologies for purposes of describing the disclosed subject matter, and one skilled in the art may recognize that further combinations and permutations of the various embodiments are possible. The disclosed subject matter is intended to embrace all such alterations, modifications, and variations that fall within the spirit and scope of the appended claims.

Referring now to details of one or more elements illustrated at FIG. 10, an illustrative cloud computing environment 1000 is depicted. FIG. 10 is a schematic block diagram of a computing environment 1000 with which the disclosed subject matter can interact. The system 1000 comprises one or more remote component(s) 1010. The remote component(s) 1010 can be hardware and/or software (e.g., threads, processes, computing devices). In some embodiments, remote component(s) 1010 can be a distributed computer system, connected to a local automatic scaling component and/or programs that use the resources of a distributed computer system, via communication framework 1040. Communication framework 1040 can comprise wired network devices, wireless network devices, mobile devices, wearable devices, radio access network devices, gateway devices, femtocell devices, servers, etc.

The system 1000 also comprises one or more local component(s) 1020. The local component(s) 1020 can be hardware and/or software (e.g., threads, processes, computing devices). In some embodiments, local component(s) 1020 can comprise an automatic scaling component and/or programs that communicate / use the remote resources 1010 and 1020, etc., connected to a remotely located distributed computing system via communication framework 1040.

One possible communication between a remote component(s) 1010 and a local component(s) 1020 can be in the form of a data packet adapted to be transmitted between two or more computer processes. Another possible communication between a remote component(s) 1010 and a local component(s) 1020 can be in the form of circuit-switched data adapted to be transmitted between two or more computer processes in radio time slots. The system 1000 comprises a communication framework 1040 that can be employed to facilitate communications between the remote component(s) 1010 and the local component(s) 1020, and can comprise an air interface, e.g., Uu interface of a UMTS network, via a long-term evolution (LTE) network, etc. Remote component(s) 1010 can be operably connected to one or more remote data store(s) 1050, such as a hard drive, solid state drive, SIM card, device memory, etc., that can be employed to store information on the remote component(s) 1010 side of communication framework 1040. Similarly, local component(s) 1020 can be operably connected to one or more local data store(s) 1030, that can be employed to store information on the local component(s) 1020 side of communication framework 1040.

With regard to the various functions performed by the above described components, devices, circuits, systems, etc., the terms (including a reference to a "means") used to describe such components are intended to also include, unless otherwise indicated, any structure(s) which performs the specified function of the described component (e.g., a functional equivalent), even if not structurally equivalent to the disclosed structure. In addition, while a particular feature of the disclosed subject matter may have been disclosed with respect to only one of several implementations, such feature may be combined with one or more other features of the other implementations as may be desired and advantageous for any given or particular application.

The terms "exemplary" and/or "demonstrative" as used herein are intended to mean serving as an example, instance, or illustration. For the avoidance of doubt, the subject matter disclosed herein is not limited by such examples. In addition, any aspect or design described herein as "exemplary" and/or "demonstrative" is not necessarily to be construed as preferred or advantageous over other aspects or designs, nor is it meant to preclude equivalent structures and techniques known to one skilled in the art. Furthermore, to the extent that the terms "includes," "has," "contains," and other similar words are used in either the detailed description or the claims, such terms are intended to be inclusive - in a manner similar to the term "comprising" as an open transition word - without precluding any additional or other elements.

The term "or" as used herein is intended to mean an inclusive "or" rather than an exclusive "or." For example, the phrase "A or B" is intended to include instances of A, B, and both A and B. Additionally, the articles "a" and "an" as used in this application and the appended claims should generally be construed to mean "one or more" unless either otherwise specified or clear from the context to be directed to a singular form.

The term "set" as employed herein excludes the empty set, i.e., the set with no elements therein. Thus, a "set" in the subject disclosure includes one or more elements or entities. Likewise, the term "group" as utilized herein refers to a collection of one or more entities.

The terms "first," "second," "third," and so forth, as used in the claims, unless otherwise clear by context, is for clarity only and doesn't otherwise indicate or imply any order in time. For instance, "a first determination," "a second determination," and "a third determination," does not indicate or imply that the first determination is to be made before the second determination, or vice versa, etc.

As used in this disclosure, in some embodiments, the terms "component," "system" and the like are intended to refer to, or comprise, a computer-related entity or an entity related to an operational apparatus with one or more specific functionalities, wherein the entity can be either hardware, a combination of hardware and software, software, or software in execution. As an example, a component can be, but is not limited to being, a process running on a processor, a processor, an object, an executable, a thread of execution, computer-executable instructions, a program, and/or a computer. By way of illustration and not limitation, both an application running on a server and the server can be a component.

One or more components can reside within a process and/or thread of execution and a component can be localized on one computer and/or distributed between two or more computers. In addition, these components can execute from various computer readable media having various data structures stored thereon. The components can communicate via local and/or remote processes such as in accordance with a signal having one or more data packets (e.g., data from one component interacting with another component in a local system, distributed system, and/or across a network such as the internet with other systems via the signal). As another example, a component can be an apparatus with specific functionality provided by mechanical parts operated by electric or electronic circuitry, which is operated by a software application or firmware application executed by a processor, wherein the processor can be internal or external to the apparatus and executes at least a part of the software or firmware application. As yet another example, a component can be an apparatus that provides specific functionality through electronic components without mechanical parts, the electronic components can comprise a processor therein to execute software or firmware that confers at least in part the functionality of the electronic components. While various components have been illustrated as separate components, it will be appreciated that multiple components can be implemented as a single component, or a single component can be implemented as multiple components, without departing from example embodiments.

The term "facilitate" as used herein is in the context of a system, device or component "facilitating" one or more actions or operations, in respect of the nature of complex computing environments in which multiple components and/or multiple devices can be involved in some computing operations. Non-limiting examples of actions that may or may not involve multiple components and/or multiple devices comprise transmitting or receiving data, establishing a connection between devices, determining intermediate results toward obtaining a result, etc. In this regard, a computing device or component can facilitate an operation by playing any part in accomplishing the operation. When operations of a component are described herein, it is thus to be understood that where the operations are described as facilitated by the component, the operations can be optionally completed with the cooperation of one or more other computing devices or components, such as, but not limited to, sensors, antennae, audio and/or visual output devices, other devices, etc.

Further, the various embodiments can be implemented as a method, apparatus or article of manufacture using standard programming and/or engineering techniques to produce software, firmware, hardware, or any combination thereof to control a computer to implement the disclosed subject matter. The term "article of manufacture" as used herein is intended to encompass a computer program accessible from any computer-readable (or machine-readable) device or computer-readable (or machine-readable) storage/communications media. For example, computer readable storage media can comprise, but are not limited to, magnetic storage devices (e.g., hard disk, floppy disk, magnetic strips), optical disks (e.g., compact disk (CD), digital versatile disk (DVD)), smart cards, and flash memory devices (e.g., card, stick, key drive). Of course, those skilled in the art will recognize many modifications can be made to this configuration without departing from the scope or spirit of the various embodiments.

Moreover, terms such as "mobile device equipment," "mobile station," "mobile," "subscriber station," "access terminal," "terminal," "handset," "communication device," "mobile device" (and/or terms representing similar terminology) can refer to a wireless device utilized by a subscriber or mobile device of a wireless communication service to receive or convey data, control, voice, video, sound, gaming or substantially any data-stream or signaling-stream. The foregoing terms are utilized interchangeably herein and with reference to the related drawings. Likewise, the terms "access point (AP)," "Base Station (BS)," "BS transceiver," "BS device," "cell site," "cell site device," "gNode B (gNB)," "evolved Node B (eNode B, eNB)," "home Node B (HNB)" and the like, refer to wireless network components or appliances that transmit and/or receive data, control, voice, video, sound, gaming or substantially any data-stream or signaling-stream from one or more subscriber stations. Data and signaling streams can be packetized or frame-based flows.

Furthermore, the terms "device," "communication device," "mobile device," "subscriber," "client entity," "consumer," "client entity," "entity" and the like are employed interchangeably throughout, unless context warrants particular distinctions among the terms. It should be appreciated that such terms can refer to human entities or automated components supported through artificial intelligence (e.g., a capacity to make inference based on complex mathematical formalisms), which can provide simulated vision, sound recognition and so forth.

It should be noted that although various aspects and embodiments are described herein in the context of 5G or other next generation networks, the disclosed aspects are not limited to a 5G implementation, and can be applied in other network next generation implementations, such as sixth generation (6G), or other wireless systems. In this regard, aspects or features of the disclosed embodiments can be exploited in substantially any wireless communication technology. Such wireless communication technologies can include universal mobile telecommunications system (UMTS), global system for mobile communication (GSM), code division multiple access (CDMA), wideband CDMA (WCMDA), CDMA2000, time division multiple access (TDMA), frequency division multiple access (FDMA), multi-carrier CDMA (MC-CDMA), single-carrier CDMA (SC-CDMA), single-carrier FDMA (SC-FDMA), orthogonal frequency division multiplexing (OFDM), discrete Fourier transform spread OFDM (DFT-spread OFDM), filter bank based multi-carrier (FBMC), zero tail DFT-spread-OFDM (ZT DFT-s-OFDM), generalized frequency division multiplexing (GFDM), fixed mobile convergence (FMC), universal fixed mobile convergence (UFMC), unique word OFDM (UW-OFDM), unique word DFT-spread OFDM (UW DFT-Spread-OFDM), cyclic prefix OFDM (CP-OFDM), resource-block-filtered OFDM, wireless fidelity (Wi-Fi), worldwide interoperability for microwave access (WiMAX), wireless local area network (WLAN), general packet radio service (GPRS), enhanced GPRS, third generation partnership project (3GPP), long term evolution (LTE), 5G, third generation partnership project 2 (3GPP2), ultra-mobile broadband (UMB), high speed packet access (HSPA), evolved high speed packet access (HSPA+), high-speed downlink packet access (HSDPA), high-speed uplink packet access (HSUPA), Zigbee, or another institute of electrical and electronics engineers (IEEE) 802.12 technology.

The description of illustrated embodiments of the subject disclosure as provided herein, including what is described in the Abstract, is not intended to be exhaustive or to limit the disclosed embodiments to the precise forms disclosed. While specific embodiments and examples are described herein for illustrative purposes, various modifications are possible that are considered within the scope of such embodiments and examples, as one skilled in the art can recognize. In this regard, while the subject matter has been described herein in connection with various embodiments and corresponding drawings, where applicable, it is to be understood that other similar embodiments can be used or modifications and additions can be made to the described embodiments for performing the same, similar, alternative, or substitute function of the disclosed subject matter without deviating therefrom. Therefore, the disclosed subject matter should not be limited to any single embodiment described herein, but rather should be construed in breadth and scope in accordance with the appended claims below.

Various non-limiting aspects of various embodiments described herein are presented in the following clauses.

Clause 1. A system, comprising: a memory that stores computer executable components; and a processor that executes the computer executable components stored in the memory, wherein the computer executable components comprise: a battery discharge component configured to: determine an amount of excess energy available for discharge from a battery pack; determine at least one receiver system for the excess energy; and control transfer of the excess energy from the battery pack to the at least one receiver system.

Clause 2. The system of any preceding clause, wherein the battery pack comprises at least one battery cell.

Clause 3. The system of any preceding clause, wherein the at least one receiver system comprises one of a microgrid, a battery pack located onboard a vehicle, a wide area synchronous grid, or other energy storage device configured to receive electrical energy.

Clause 4. The system of any preceding clause, wherein the battery discharge component is further configured to determine an operating condition of the at least one receiver system.

Clause 5. The system of any preceding clause, wherein the recipient system is a wide area synchronous grid, wherein the battery discharge component is further configured to: determine the operating condition of the wide area synchronous grid; and in response to determining the wide area synchronous grid is in a grid emergency condition, selecting the wide area synchronous grid as the receiver system for the excess energy.

Clause 6. The system of any preceding clause, wherein the battery discharge component is further configured to: further determine whether the wide area synchronous grid is currently in a grid emergency condition; and in response to determining the operating condition of the wide area synchronous grid is currently not in a grid emergency condition, terminating discharge of the excess energy to the wide area synchronous grid.

Clause 7. The system of any preceding clause, wherein the battery discharge component is further configured to: determine a discharge parameter to be compliant with during the discharging operation, wherein the discharge parameter can include a thermal condition, a voltage condition, a current, an impedance, a grid code, a specification, or a regulation;

and control the discharge of the excess energy in accordance with the discharge parameter.

Clause 8. The system of any preceding clause, further comprising a presentation component configured to: present a list of options to prioritize selection of a receiver system; determine an option selected from the list of options; rank the receiver systems based on the selected option; and presenting the receiver systems in accordance with the ranking based on the selected option.

Clause 9. The system of any preceding clause, further comprising a presentation component configured to: present a set of inputs, wherein the set of inputs facilitate selection of respective portions of the excess energy to be discharged to a respective receiver system in the at least one receiver system; receive a first input regarding a first portion of excess energy to discharge to a first receiver system; receive a second input regarding a second portion of excess energy to discharge to a second receiver system; and wherein the discharge component is further configured to: control discharge of the first portion of excess energy to the first receiver system; and control discharge of the second portion of excess energy to the second receiver system.

Clause 10. The system of any preceding clause, wherein the battery pack is configured to be implemented onboard an electric vehicle and provision power to the electric vehicle.

Clause 11. A computer-implemented method comprising: determining, by a device comprising a processor, an amount of excess energy to be discharged from a battery pack; determining, by the device, a group of receiver systems available to receive the excess energy; and controlling, by the device, discharge of the excess energy to at least one receiver systems in the group of receiver systems.

Clause 12. The computer-implemented method of any preceding clause, wherein: the battery pack comprises at least one battery cell; and at least one receiver system comprises one of a microgrid, a battery pack located onboard a vehicle, a wide area synchronous grid, or other energy storage device configured to receive electrical energy.

Clause 13. The computer-implemented method of any preceding clause, wherein the battery pack is located onboard a vehicle, and the battery pack is configured to provide electrical energy to the vehicle.

Clause 14. The computer-implemented method of any preceding clause, further comprising: presenting, by the device, a list of options to prioritize selection of a receiver system; determining, by the device, an option selected from the list of options; ranking, by the device, the receiver systems based on the selected option; presenting, by the device, the receiver systems in accordance with the ranking based on the selected option; and receiving, by the device, a selected receiver system to receive the excess energy.

Clause 15. The computer-implemented method of any preceding clause, wherein the receiver system is a wide area synchronous grid, the method further comprising: determining, by the device, an operating condition of the wide area synchronous grid; and in response to determining the wide area synchronous grid is in a grid emergency condition, selecting, by the device, the wide area synchronous grid as the receiver system for the excess energy.

Clause 16. A computer program product for discharging excess energy from a battery pack, the computer program product comprising a computer readable storage medium having program instructions embodied therewith, the program instructions executable by a processor to cause the processor to: determine an amount of excess energy to be discharged from a battery pack; determine a group of receiver systems available to receive the excess energy; and control discharge of the excess energy to at least one receiver systems in the group of receiver systems.

Clause 17. The computer program product of any preceding clause, wherein the program instructions are further executable by the processor to cause the processor to: present a list of options to prioritize selection of a receiver system; determine an option selected from the list of options; rank the receiver systems based on the selected option; present the receiver systems in accordance with the ranking based on the selected option; and receive an input indicating a selected receiver system to receive the excess energy.

Clause 18. The computer program product of any preceding clause, wherein the at least one receiver system comprises one of a microgrid, a battery pack located onboard a vehicle, a wide area synchronous grid, or other energy storage device configured to receive electrical energy.

Clause 19. The computer program product of any preceding clause, wherein the battery pack is configured to provision electrical energy to a vehicle.

Clause 20. The computer program product of any preceding clause, wherein the recipient system is a wide area synchronous grid, and wherein the program instructions are further executable by the processor to cause the processor to: determine the operating condition of the wide area synchronous grid; and in response to determining the wide area synchronous grid is in a grid emergency condition, select the wide area synchronous grid as the receiver system for the excess energy.

In various cases, any suitable combination of clauses 1-10 can be implemented.

In various cases, any suitable combination of clauses 11-15 can be implemented.

In various cases, any suitable combination of clauses 16-20 can be implemented.

**Claims**

1. A system, comprising:

   a memory that stores computer executable components; and
   a processor that executes the computer executable components stored in the memory, wherein the computer executable components comprise:
   a battery discharge component configured to:

   determine an amount of excess energy available for discharge from a battery pack;
   determine at least one receiver system for the excess energy; and
   control transfer of the excess energy from the battery pack to the at least one receiver system.

2. The system of claim 1, wherein the battery pack comprises at least one battery cell.

3. The system of claim 1, wherein the at least one receiver system comprises one of a microgrid, a battery pack located onboard a vehicle, a wide area synchronous grid, or other energy storage device configured to receive electrical energy.

4. The system of claim 3, wherein the battery discharge component is further configured to determine an operating condition of the at least one receiver system.

5. The system of claim 4, wherein the recipient system is a wide area synchronous grid, wherein the battery discharge component is further configured to:

   determine the operating condition of the wide area synchronous grid; and
   in response to determining the wide area synchronous grid is in a grid emergency condition, selecting the wide area synchronous grid as the receiver system for the excess energy.

6. The system of claim 5, wherein the battery discharge component is further configured to:

   further determine whether the wide area synchronous grid is currently in a grid emergency condition; and
   in response to determining the operating condition of the wide area synchronous grid is currently not in a grid emergency condition, terminating discharge of the excess energy to the wide area synchronous grid.

7. The system of claim 1, wherein the battery discharge component is further configured to:

   determine a discharge parameter to be compliant with during the discharging operation, wherein the discharge parameter can include a thermal condition, a voltage condition, a current, an impedance, a grid code, a specification, or a regulation; and
   control the discharge of the excess energy in accordance with the discharge parameter.

8. The system of claim 1, further comprising a presentation component configured to:

   present a list of options to prioritize selection of a receiver system;
   determine an option selected from the list of options;
   rank the receiver systems based on the selected option; and
   present the receiver systems in accordance with the ranking based on the selected option.

9. The system of claim 1, further comprising a presentation component configured to:

   present a set of inputs, wherein the set of inputs facilitate selection of respective portions of the excess energy to be discharged to a respective receiver system in the at least one receiver system;
   receive a first input regarding a first portion of excess energy to discharge to a first receiver system;
   receive a second input regarding a second portion of excess energy to discharge to a second receiver system; and
   wherein the discharge component is further configured to:

control discharge of the first portion of excess energy to the first receiver system; and
control discharge of the second portion of excess energy to the second receiver system.

10. The system of claim 1, wherein the battery pack is configured to be implemented onboard an electric vehicle and provision power to the electric vehicle.

11. A computer-implemented method comprising:

determining, by a device comprising a processor, an amount of excess energy to be discharged from a battery pack, wherein the battery pack is located onboard a vehicle, and the battery pack is configured to provide electrical energy to the vehicle, and the battery pack comprises at least one battery cell;
determining, by the device, a group of receiver systems available to receive the excess energy; and
controlling, by the device, discharge of the excess energy to at least one receiver systems in the group of receiver systems, wherein the at least one receiver system comprises one of a microgrid, a battery pack located onboard another vehicle, a wide area synchronous grid, or other energy storage device configured to receive electrical energy.

12. The computer-implemented method of claim 11, further comprising:

presenting, by the device, a list of options to prioritize selection of a receiver system;
determining, by the device, an option selected from the list of options;
ranking, by the device, the receiver systems based on the selected option;
presenting, by the device, the receiver systems in accordance with the ranking based on the selected option; and
receiving, by the device, a selected receiver system to receive the excess energy.

13. The computer-implemented method of claim 11, wherein the receiver system is a wide area synchronous grid, the method further comprising:

determining, by the device, an operating condition of the wide area synchronous grid; and
in response to determining the wide area synchronous grid is in a grid emergency condition, selecting, by the device, the wide area synchronous grid as the receiver system for the excess energy.

14. A computer program product for discharging excess energy from a battery pack, the computer program product comprising a computer readable storage medium having program instructions embodied therewith, the program instructions executable by a processor to cause the processor to:

determine an amount of excess energy to be discharged from a battery pack, wherein the battery pack is configured to provision electrical energy to a vehicle;
determine a group of receiver systems available to receive the excess energy; and
control discharge of the excess energy to at least one receiver systems in the group of receiver systems, wherein the at least one receiver system comprises one of a microgrid, a battery pack located onboard a vehicle, a wide area synchronous grid, or other energy storage device configured to receive electrical energy.

15. The computer program product of claim 16, wherein the program instructions are further executable by the processor to cause the processor to:

present a list of options to prioritize selection of a receiver system;
determine an option selected from the list of options;
rank the receiver systems based on the selected option;
present the receiver systems in accordance with the ranking based on the selected option; and
receive an input indicating a selected receiver system to receive the excess energy.

100A

RECEIVER SYSTEM(S) 163A-n

RECEIVER STATUS 170A-n

MICROGRID 150

BATTERY DISCHARGE SYSTEM 110

VEHICLE 155

BATTERY PACK 105

SWITCH 121

EXCESS ENERGY 107A-n

DISCHARGE COMPONENT 120

DISCHARGE CONFIG. 109A-n

GRID 160

BATTERY STATUS 108A-n

COMP. SYS. 180A

OTHER ENERGY RECEIVER 162

STORAGE DEVICE 151A-n

# FIG. 1A

FIG. 1B

100B

**BATTERY DISCHARGE SYSTEM 110**
- CHARGE CONT. 168
- SWITCH 121
- DISCHARGE COMP. 120
- SELECTION COMP. 130
- PRESENTATION COMP. 131
- DATA HISTORIAN 133
- PROCESS COMP. 135
- COMP. SYS. 180A
  - MEM. 184A
  - PROC. 182A
  - DISP 187A
  - HMI 186A
  - I/O 188A

146
147

102A-n
ACCT 103A-n
COMP. 104A-n

DISCHARGE CONFIG. 109A-n

PROC'S 137A-n

HIST DATA 190A-n

BATTERY PACK 105
- EXCESS ENERGY 107A-n
- BATTERY STATUS 108A-n

COMMS 197A-n
OPTIONS 132A-n
REC'R STATUS 170A-n

**RECEIVER SYSTEM(S) 163A-n**

MICROGRID 150
- COMP. SYS. 180M
- MCC 152M
- SD 151M
- EN-STR 153M

VEHICLE 155
- COMP. SYS. 180V
- VCC 152V
- SD 151V
- EN-STR 153V

GRID 160
- COMP. SYS. 180G
- GCC 152G
- SD 151G
- EN-STR 153G

OTHER ENERGY RECEIVER 162
- COMP. SYS. 180O
- OCC 152O
- SD 151O
- EN-STR 153O

**FIG. 2**

300A

SELECTION SCREEN 310A (HMI 186/SCREEN 187)

PRIORITY REASONS 360A-n

| PRICE 360P | RATE 360R | TIME 360T | OTHER 360O |

320A-n

OPT 132A MICROGRID 150

REASON 350A
REASON 350B
REASON 350C

ALL
0      50      100

330A-n

OPT 132B VEHICLE 155

REASON 350D
REASON 350E
REASON 350F

ALL
0      50      100

340A-n

OPT 132C ENERGY GRID 160

REASON 350G
REASON 350H
REASON 350I

ALL
0      50      100

OPT 132D OTHER RECEIVER 162

REASON 350J
REASON 350K
REASON 350L

ALL
0      50      100

## FIG. 3A

300B

SELECTION SCREEN 310B (HMI 186/SCREEN 187)

# GRID IN EMERGENCY CONDITION

BEING GIVEN PRIORITY
UNTIL FURTHER NOTICE!

370A

APPROVE ENERGY DISCHARGE 375

## FIG. 3B

400

**FIG. 4**

410 — CONNECT BATTERY PACK TO BDS

420 — DETERMINE ENERGY TO DISCHARGE

430 — DETERMINE AVAILABLE RECEIVER SYSTEMS

440 — MORE THAN ONE RECEIVER AVAILABLE?

NO → 450 — DISCHARGE TO AVAILABLE RECEIVER SYSTEM

YES

460 — PRESENT SELECTION OF RECEIVER SYSTEMS

470 — RECEIVE SELECTION

480 — SHARED DISCHARING?

NO → 490 — DISCHARGE TO SELECTED RECEIVER SYSTEM

YES

495 — DISCHARGE TO SELECTED RECEIVER SYSTEMS

498 — TERMINATE DISCHARGING

500

510 — CONNECT BATTERY PACK TO BDS

520 — DETERMINE STATUS OF BATTERY PACK

530 — PRESENT SELECTION OF RECEIVER SYSTEMS

540 — GRID EMERGENCY?

550 — YES — PRIORITIZE GRID

NO

560 — PRESENT OPTIONS

570 — DISCHARGE TO SELECTED RECEIVER SYSTEM

580 — DISCHARGE TO SELECTED RECEIVER SYSTEM

590 — TERMINATE DISCHARGING

FIG. 5

600

| 610 | OBTAIN HISTORY OF PRIOR SELECTION(S) FOR RECEIVER SYSTEM |

| 620 | OBTAIN CURRENT OPERATING CONDITION(S) AND/OR AVAILABLE RECEIVERS |

| 630 | COMPARE CURRENT CONDITIONS WITH HISTORICAL DATA |

| 640 | GENERATE A RECOMMENDED RECEIVER SYSTEM FOR THE EXCESS ENERGY |

FIG. 6

700

```
710 ──┐  OBTAIN ONE OR MORE REASONS FOR
            PRIORITIZING A RECEIVER SYSTEM

                     │
                     ▼

720 ──┐  PRESENT ONE OR MORE REASONS TO
            PRIORITIZE SELECTION OF RECEIVER
            SYSTEM

                     │
                     ▼

730 ──┐  RECEIVE INPUT REGARDING PRIORITY FOR
            SELECTING

                     │
                     ▼

740 ──┐  IDENTIFY DATA REGARDING THE RECEIVED
            INPUT FOR PRIORITY

                     │
                     ▼

750 ──┐  PRESENT A RANKED LIST OF RECEIVER
            SYSTEMS BASED ON THE RECEIVED
            PRIORITY

                     │
                     ▼

760 ──┐  RECEIVE SELECTION OF THE RECEIVER
            SYSTEM

                     │
                     ▼

770 ──┐  IMPLEMENT OPTION, SUCH AS (a) MAKE
            PAYMENT, (b) SCHEDULE DISCHARGE, ETC.

                     │
                     ▼

780 ──┐  INPLEMENT DISCHARGE OF EXCESS
            ENERGY TO THE SELECTED SYSTEM
```

FIG. 7

800

810 — DETERMINE AN AMOUNT OF EXCESS ENERGY AVAILABLE FOR DISCHARGE FROM A BATTERY PACK

820 — DETERMINE AT LEAST ONE RECEIVER SYSTEM FOR THE EXCESS ENERGY

830 — CONTROL TRANSFER OF THE EXCESS ENERGY FROM THE BATTERY PACK TO THE AT LEAST ONE RECEIVER SYSTEM

FIG. 8

FIG. 9

FIG. 10

**EUROPEAN SEARCH REPORT**

Application Number

EP 25 17 0583

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 241 975 B2 (PATEL HIMANSHU B [US]) 8 February 2022 (2022-02-08) * columns 1-7; figures 1/7-7/7 * | 1-15 | INV. H02J3/32 B60L55/00 H02J7/00 |
| A | US 2023/216304 A1 (SALTER STUART C [US] ET AL) 6 July 2023 (2023-07-06) * paragraphs [0001] - [0022], [0078]; figures 1/7-7/7 * | 1-15 | |
| A | US 2008/040263 A1 (POLLACK SETH B [US] ET AL) 14 February 2008 (2008-02-14) * paragraphs [0003] - [0010]; figures 1-23 * | 1-15 | |
| A | US 2010/017045 A1 (NESLER CLAY G [US] ET AL) 21 January 2010 (2010-01-21) * paragraphs [0002] - [0008]; figures 1-9 * | 1-15 | |

TECHNICAL FIELDS SEARCHED (IPC)

H02J
B60L

The present search report has been drawn up for all claims

| Place of search | Date of completion of the search | Examiner |
|---|---|---|
| Munich | 30 September 2025 | Krasser, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 0583

This annex lists the patent family members relating to the patent documents cited in the above-mentioned European search report.
The members are as contained in the European Patent Office EDP file on
The European Patent Office is in no way liable for these particulars which are merely given for the purpose of information.

30-09-2025

| Patent document cited in search report | | Publication date | Patent family member(s) | | Publication date |
|---|---|---|---|---|---|
| US 11241975 | B2 | 08-02-2022 | US | 2022009373 A1 | 13-01-2022 |
| | | | WO | 2022010649 A1 | 13-01-2022 |
| US 2023216304 | A1 | 06-07-2023 | CN | 116394801 A | 07-07-2023 |
| | | | DE | 102022134952 A1 | 06-07-2023 |
| | | | US | 2023216304 A1 | 06-07-2023 |
| US 2008040263 | A1 | 14-02-2008 | NONE | | |
| US 2010017045 | A1 | 21-01-2010 | US | 2010017045 A1 | 21-01-2010 |
| | | | WO | 2010042550 A2 | 15-04-2010 |

EPO FORM P0459

For more details about this annex : see Official Journal of the European Patent Office, No. 12/82